# EUROPÄISCHE PATENTSCHRIFT

(11) **EP 3 191 235 B1**
(45) Veröffentlichungstag und Bekanntmachung des Hinweises auf die Patenterteilung: **28.11.2018**
(21) Anmeldenummer: 15777881.2
(22) Anmeldetag: 11.09.2015
(51) Int. Cl.: B21C 37/04, B21C 51/00, B21F 35/02, B21F 99/00, B21C 1/00, B21F 35/00, F16F 1/02, B23K 26/00, B23K 26/08, B23K 26/362

(54) **VORRICHTUNG UND VERFAHREN ZUM HERSTELLEN EINES FEDERDRAHTS, VORRICHTUNG UND VERFAHREN ZUM MARKIEREN EINES FEDERDRAHTS, VORRICHTUNG UND VERFAHREN ZUM HERSTELLEN VON FEDERN AUS EINEM FEDERDRAHT SOWIE FEDERDRAHT**
DEVICE AND METHOD FOR PRODUCING A SPRING WIRE, DEVICE AND METHOD FOR MARKING A SPRING WIRE, DEVICE AND METHOD FOR PRODUCING SPRINGS FROM A SPRING WIRE, AND SPRING WIRE
DISPOSITIF ET PROCÉDÉ DE PRODUCTION D'UN FIL D'ACIER POUR RESSORT, DISPOSITIF ET PROCÉDÉ DE MARQUAGE D'UN FIL D'ACIER POUR RESSORT, DISPOSITIF ET PROCÉDÉ DE PRODUCTION DE RESSORTS À PARTIR D'UN FIL D'ACIER POUR RESSORT ET FIL D'ACIER POUR RESSORT

(30) Priorität: 12.09.2014 DE 102014113159
(43) Veröffentlichungstag der Anmeldung: 19.07.2017
(73) Patentinhaber: Scherdel Innotec Forschungs- Und Entwicklungs GmbH, 95615 Marktredwitz (DE)
(72) Erfinder: BACH, Marcus, 95615 Marktredwitz (DE); BAUER, Marco, 91257 Pegnitz (DE)
(74) Vertreter: Schmitt-Nilson Schraud Waibel Wohlfrom Patentanwälte Partnerschaft mbB
(86) Internationale Anmeldenummer: PCT/EP2015/070811
(87) Internationale Veröffentlichungsnummer: WO 2016/038180

(56) Entgegenhaltungen:
- EP-A1- 2 564 974
- WO-A1-96/17701
- DE-C1- 19 604 408
- GB-A- 964 346
- JP-A- 2009 012 037
- US-A1- 2009 159 862

## Beschreibung

Die vorliegende Erfindung betrifft eine Vorrichtung und ein Verfahren zum Herstellen eines Federdrahts, eine Vorrichtung und ein Verfahren zum Markieren eines Federdrahts, eine Vorrichtung und ein Verfahren zum Herstellen von Federn aus einem Federdraht, sowie einen Federdraht.

Derzeit werden Federdrähte mit einer Herstellungseinrichtung in einem fortlaufenden Verfahren hergestellt. Bei diesen Verfahren kann es passieren, dass Fehler in oder auf den Federdraht auftreten, die oft nur unzureichend erkannt oder kenntlich gemacht werden.

Im weiteren Verlauf der Verarbeitung eines solchen Federdrahts zu Federn muss der Herstellungsprozess bei solchen Drahtfehlern häufig angehalten werden, und der fehlerhafte Bereich muss mit einem hohen Zeit- und Arbeitsaufwand herausgetrennt werden.

Aus der DE 196 04 408 C1 ist eine Produktionsanlage zum Herstellen von Schraubenfedern aus bikonischen Drähten bekannt. Bei dieser gelangt der Draht von einem kippbaren Abcoiler über ein Richtaggregat zu einer Wirbelstrom-Rissprüfanlage und von dort in eine Drahtvorwärmeinrichtung, die von einem Generator gespeist wird. Des Weiteren sind eine Draht-Kennzeichnungseinrichtung, eine Durchmesser-Messeinrichtung, eine Vorrichtung zur Temperaturmessung, eine Farbriss-Markierung und ein weiteres Richtaggregat vor dem eigentlichen Windeautomaten vorgesehen. Dem Windeautomaten ist eine Schneidvorrichtung zugeordnet. Kern der DE 196 04 408 C1 ist es, dass unter Vermeidung von Kerben in dem Draht die Durchmesser-Messeinrichtung dann einen zusätzlichen Steuerimpuls abgibt, wenn beispielsweise ein rampenartig ausgebildetes, konisches Stück des Drahtes die Durchmesser-Messeinrichtung passiert. Daraufhin wird an einer bestimmten Stelle, an der die Durchmesser-Messeinrichtung angestellt ist, der Steuerimpuls für die Schneidevorrichtung ausgelöst.

Es ist daher eine Aufgabe der vorliegenden Erfindung, effizientere Verfahren und Vorrichtungen bereitzustellen, mit denen eine größere Federherstellungskapazität ermöglicht wird und eine Verarbeitung von fehlerhaften Federdrahtbereichen zuverlässig ausgeschlossen werden kann.

Diese Aufgabe wird durch den Gegenstand der unabhängigen Patentansprüche gelöst. Vorteilhafte Weiterbildungen ergeben sich aus den abhängigen Ansprüchen.

Ein erfindungsgemäßes System, mit einer Vorrichtung zum Herstellen eines Federdrahts ist im Anspruch 4 definiert.

Ein erfindungsgemäßes System, mit einer Vorrichtung zum Markieren eines Federdrahts ist im Anspruch 5 definiert.

Gemäß einem Grundgedanken der vorliegenden Erfindung können mit einer erfindungsgemäßen Vorrichtung zum Herstellen eines Federdrahts und mit einem erfindungsgemäßen Verfahren zum Herstellen eines Federdrahts fehlerhafte Bereiche des Federdrahts automatisch, im laufenden Betrieb des Herstellungsprozesses und ohne Unterbrechungen desselben, durch Laser-Markierungen gekennzeichnet werden.

Diese Federdraht-Herstellung ist effizient und kostengünstig, weil für das Kennzeichnen von fehlerhaften Bereichen keine Unterbrechung des Herstellungsprozesses erforderlich ist.

Gemäß einem weiteren Grundgedanken der vorliegenden Erfindung können mit einer erfindungsgemäßen Vorrichtung zum Markieren eines Federdrahts und mit einem erfindungsgemäßen Verfahren zum Markieren eines Federdrahts fehlerhafte Bereiche bei schon hergestellten Federdrähten automatisch in einem kontinuierlichen Verfahren durch Lasermarkierungen gekennzeichnet werden.

Die fehlerhaften Bereiche können zuverlässig für die nachfolgenden Verarbeitungsschritte gekennzeichnet werden, ohne dass hierfür ein zusätzliches Material erforderlich ist, was den Ausschuss reduziert, zumal fehlerhafte Bereiche des Federdrahts oder Federn, die aus solchen fehlerhaften Bereichen des Federdrahts hergestellt worden sind, einfach wieder eingeschmolzen und zu neuem Federdraht verarbeitet werden können.

Während mit dem erfindungsgemäßen System und dem erfindungsgemäßen Verfahren zum Herstellen eines Federdrahts, der Federdraht hergestellt wird und gleichzeitig fehlerhafte Bereiche detektiert und markiert werden, gehen das erfindungsgemäße System und das erfindungsgemäße Verfahren zum Markieren eines Federdrahts davon aus, dass der Federdraht hergestellt worden ist und die fehlerhaften Bereiche in einem separaten Verfahren und auf einer separaten Vorrichtung durch Lasermarkierungen markiert werden.

Die Vorrichtungen und Verfahren entsprechen einander weitgehend und unterscheiden sich hauptsächlich darin, dass bei dem System und dem Verfahren zum Herstellen eines Federdrahts der Federdraht der Prüfeinheit und der Lasermarkiereinheit von der Drahtherstellungseinrichtung zugeführt wird, wohingegen bei dem erfindungsgemäßen System und dem erfindungsgemäßen Verfahren zum Markieren eines Federdrahts die Zuführung des Federdrahts durch eine Zuführeinheit, insbesondere eine Zuführrolle erfolgt.

Sofern nicht anders angegeben, betreffen alle nachfolgend erläuterten Vorteile und Ausführungsformen beide Erfindungsaspekte, nämlich sowohl das erfindungsgemäße System und das erfindungsgemäße Verfahren zum Herstellen eines Federdrahts als auch das erfindungsgemäße System und das erfindungsgemäße Verfahren zum Markieren eines Federdrahts, der bereits hergestellt worden ist.

Für die erfindungsgemäßen Laser-Markierungen zur Kennzeichnung von fehlerhaften Bereichen des Federdrahts werden fehlerhafte Bereiche von Federdrähten aus üblichen Federstahlmaterialien durch einen Materialabtrag, also eine Vertiefung gekennzeichnet.

Die Laser-Markierung muss dabei nicht genau an der Stelle, an der sich der fehlerhafte Bereich befindet, angeordnet sein, sie kann auch davor oder danach angeordnet sein. Wesentlich ist nur, dass die räumliche Beziehung zwischen fehlerhaftem Bereich und Position der Laser-Markierung bekannt ist.

Beim Richten des Laserstrahls auf die Oberfläche des Federdrahts ergibt sich in Folge der Verdampfung des Materials ein Materialabtrag.

Die Vertiefungen der Laser-Markierungen liegen in der Oberfläche des Federdrahts üblicherweise im Bereich 1µm bis 1mm.

Der Federdraht kann direkt nach der Federdrahtherstellung oder Zuführung des Federdrahts in-line durch eine Prüfeinheit mit anschließender Laser-Markiereinheit geführt werden, bevor der Federdraht auf einer Aufwickelrolle aufgewickelt wird. Dadurch entfällt für die Überprüfung und Markierung der fehlerhaften Bereiche des Federdrahts ein zusätzlicher Zeitbedarf und auch ein zusätzlicher Transportweg.

Der Federdraht kann nach der Markierung seiner fehlerhaften Bereichs unmittelbar aufgerollt werden. Eine Trocknungsphase, die z.B. beim Markieren mittels eines Lackes erforderlich sein könnte, entfällt. Der Raumbedarf für die zusätzlich vorzusehende Prüfeinheit und für die zusätzlich vorzusehende Laser-Markiereinheit ist sehr gering.

Das erfindungsgemäße materialabtragende Markieren eines fehlerhaften Bereichs durch einen Laser stellt sicher, dass die Dicke des Federdrahts einen entsprechenden Toleranzbereich nicht überschreitet. Dies ist ein großer Vorteil gegenüber einer denkbaren materialauftragenden Markierung, zumal Drahtführungen und -einzüge bei den nachfolgenden Herstellungsschritten häufig exakt auf die Geometrie des Federdrahts abgestimmt sind.

Gemäß einer ersten, für alle Ausprägungen der Erfindung gültigen Ausführungsform weist der erfindungsgemäße Federdraht als Material Federstahl auf, insbesondere SiCr-legierten Federstahl, SiCrV-legierten Federstahl, oder SiCrNiV-legierten Federstahl.

Als Legierungsbestandteile für solchen Federstahldraht werden die Elemente Si, Cr, V und Ni verwendet. Die Legierungskombinationen SiCr, SiCrV, SiCrNiV sowie die Unterscheidung in die Güten FD, TD und VD sind charakteristisch für legierte ölschlussvergütete und unvergütete Federstahldrähte.

Der Federdraht kann als olschlussvergüteter, unvergüteter, patentiert gezogener und nichtrostender Federstahldraht ausgebildet sein.

Gemäß einer weiteren, für alle Ausprägungen der Erfindung gültigen Ausführungsform hat der erfindungsgemäße Federdraht einen Durchmesser zwischen 0,5 und 10mm.

Gemäß einer weiteren Ausführungsform ist die Laser-Markiereinheit so ausgebildet, dass sie, um in den fehlerhaften Bereichen des Federdrahts einen Teil der Oberfläche des Federdrahts abzutragen, einen Laserstrahl mit einer Temperatur oberhalb der Verdampfungstemperatur des Grundmaterials des Federdrahts auf den Federdraht richtet.

Übliche Verdampfungstemperaturen des Grundmaterials des Federdrahts liegen im Bereich 2000°C bis 4000°C.

Um eine geeignete Material-abtragende Lasermarkierung auf dem Federdraht erzeugen zu können, muss der Laserstrahl mit einer entsprechenden Leistung auf die Oberfläche des Federdrahts auftreffen. Die Leistung, mit welcher ein Laserstrahl emittiert wird und somit auf die Oberfläche des Federdrahts auftrifft, um den gewünschten Materialabtrag zu erzeugen, ist abhängig von der Spotgröße, der Wellenlänge des Lasers, der Geschwindigkeit, mit welcher der Draht an der Laser-Markiereinheit vorbei geführt wird, und der gewünschten Tiefe der durch den Materialabtrag zu erzeugenden Vertiefung. Ein geeigneter Bereich für die Leistung der Laser-Markiereinheit liegt in dem Bereich 10 bis 100 W. Alternativen sind selbstverständlich möglich und mit umfasst.

Dadurch sind die fehlerhaften Bereiche des Federdrahts zuverlässig gekennzeichnet und können in einem nachfolgenden Verarbeitungsschritt sicher detektiert werden.

Gemäß einer nicht-beanspruchten Alternative ist die Laser-Markiereinheit so ausgebildet, dass sie, um in den fehlerhaften Bereichen des Federdrahts einen Teil der Oberfläche des Federdrahts thermisch so anzulassen, dass die Farbe der Oberfläche des Federdrahts in diesem Teil verändert ist, einen Laserstrahl mit einer Temperatur von etwa 200°C bis 660°C auf den Federdraht richtet.

Um Lasermarkierungen mit einer solchen Farbveränderung der Oberfläche des Federdrahts aufzubringen, muss Laserstrahl mit einer entsprechenden Leistung auf die Oberfläche des Federdrahts auftreffen.

Die Leistung, mit welcher ein Laserstrahl emittiert wird und somit auf die Oberfläche des Federdrahts auftrifft, um die gewünschten Farbveränderung zu erzielen, ist abhängig von der Spotgröße, der Wellenlänge des Lasers, der Geschwindigkeit, mit welcher der Draht an der Laser-Markiereinheit vorbei geführt wird, und der gewünschten Farbe der Farbveränderung. Ein geeigneter Bereich für die Leistung der Laser-Markiereinheit liegt in dem Bereich 1 bis 10 W. Alternativen sind selbstverständlich möglich und mit umfasst.

Bei einer Anlasstemperatur von etwa 200 °C ergibt sich eine weißgelbe Anlassfarbe, bei etwa 220 °C eine strohgelbe Anlassfarbe, bei etwa 230 °C eine goldgelbe Anlassfarbe, bei etwa 240 °C eine gelbbraune Anlassfarbe, bei etwa 250 °C eine braunrote Anlassfarbe, bei etwa 260 °C eine rote Anlassfarbe, bei etwa 270 °C eine purpurrote Anlassfarbe, bei etwa 280 °C eine violette Anlassfarbe, bei etwa 290 °C eine dunkelblaue Anlassfarbe, bei etwa 300 °C eine kornblumenblaue Anlassfarbe, bei etwa 320 °C eine hellblaue Anlassfarbe, bei etwa 340 °C eine blaugraue Anlassfarbe und bei etwa 660 °C eine graue Anlassfarbe. Diese Temperaturen verstehen sich mit einem entsprechenden Toleranzbereich von plus/minus 5 bis 10 °C.

Besonders gute Kontraste und demgemäß eine besonders gute optische Erkennbarkeit von solchen Lasermarkierungen ergeben sich bei einer strohgelben, goldgelben, gelbbraunen, blauroten, roten, purpurroten, violetten, dunkelblauen, kornblumenblauen und hellblauen Anlassfarbe, und bei einer silbergrauen Farbe des Grundmaterials.

Gemäß einer weiteren Ausführungsform weist die Vorrichtung weiterhin eine mit der Prüfeinheit und der Laser-Markiereinheit verbundene Steuereinheit auf, die so ausgebildet ist, dass sie im Betrieb der Vorrichtung von der Prüfeinheit Signale über fehlerhafte Bereiche des Federdrahts erhält und die Laser-Markiereinheit so ansteuert, dass diese wenigstens eine Laser-Markierung in diese fehlerhaften Bereiche des Federdrahts einbringt. Durch eine solche Steuereinheit wird eine exakte Synchronisation zwischen dem Feststellen eines fehlerhaften Bereichs und dem Markieren des selbigen ermöglicht, unabhängig von der Drahtvorschubgeschwindigkeit.

Gemäß einer weiteren Ausführungsform weist die Vorrichtung eine Laser-Markiereinheit auf, wobei die Laser-Markiereinheit eine Strahlquelle und/oder einer Scanneroptik oder eine Projektionsmaske und/oder einer Fokussiereinrichtung aufweist, die so ausgebildet ist/sind, dass sie auf den sich bewegenden Federdraht gerichtet sind.

Eine Laser-Markiereinheit, die eine Strahlquelle, eine Scanneroptik und eine Fokussiereinrichtung aufweist, wird auch Scannersystem bezeichnet.

Mit einer Laser-Markiereinheit, die eine Strahlquelle, eine Projektionsmaske und eine Fokussiereinrichtung aufweist, können Laser-Markierungen im Wege des Masken-Projektionsverfahrens aufgebracht werden. Hierbei wird der Laserstrahl vor dem Fokussieren durch die Projektionsmaske geschickt, welche die Gestalt der aufzubringenden Laser-Markierung definiert und welche insbesondere ein Negativ der aufzubringenden Laser-Markierung darstellt. Die Laser-Markierung wird sozusagen in einem schnellen Schuss aufgebracht. Durch das Masken-Projektionsverfahren können komplexere Strukturen mit einer hohen Bearbeitungsgeschwindigkeit aufgebracht werden.

Eine solche Laser-Markiereinheit ist so ausgebildet, dass die Lasermarkierung entlang des gesamten fehlerhaften Bereichs eingebracht werden kann. Hierfür ist bzw. sind, wenn ein umfangsmäßig gesehen breiter Bereich und insbesondere ein Bereich des Federdrahts markiert werden soll, der sich um den gesamten Umfang des Federdrahts erstreckt, eine oder mehrere Laser-Markiereinheiten mit entsprechend breit projizierbarem Laser-Strahl vorzusehen.

Eine weitere Ausführungsform der Erfindung besteht darin, dass die Laser-Markiereinheit so ausgebildet ist, dass die fehlerhaften Bereiche des Federdrahts so markiert werden, dass die Laser-Markierung einen maschinenlesbaren Code, insbesondere einen Strichcode, einen Barcode oder einen Data-Matrix-Code, oder einen maschinenlesbaren Text bildet, und/oder wobei die Laser-Markiereinheit so ausgebildet ist, dass jeder fehlerhafte Bereich jeweils mit der gleichen Laser-Markierung versehen wird, oder dass jeder fehlerhafte Bereich jeweils mit einer eindeutig unterscheidbaren Laser-Markierung versehen wird, und/oder wobei die Laser-Markierung Zusatzinformationen über den jeweils markierten fehlerhaften Bereich enthält.

Durch eine maschinenlesbare Markierung wird eine zuverlässige maschinelle Erkennung von solchen fehlerhaften Bereichen in einem späteren Herstellungsschritt ermöglicht, wodurch auch der Einsatz von Prüfarbeitern minimiert werden kann.

Eine weitere Ausführungsform der Erfindung besteht darin, dass die Laser-Markiereinheit so angeordnet oder ausgebildet ist, dass die Laser-Markierung so auf den oder die fehlerhaften Bereiche des Federdrahts aufgebracht wird, dass sie sich wenigstens über einen Großteil des Umfangs des Federdrahts, insbesondere über dessen gesamten Umfang erstreckt, oder wobei die Laser-Markierung so auf den oder die fehlerhaften Bereiche des Federdrahts aufgebracht wird, dass sie sich nur über einen Teilbereich des Umfangs des Federdrahts erstreckt.

Durch das variable Aufbringen von Laser-Markierungen auf einen Federdraht können verschiedene Fehler unterschiedlich gekennzeichnet werden. Lasermarkierungen, die sich über einen großen Bereich des Umfangs des Federdrahts erstrecken, können in einem späteren Herstellungsschritt besonders zuverlässig erkannt werden.

Eine weitere Ausführungsform der Erfindung besteht darin, dass die Prüfeinheit zum Überprüfen des Federdrahts auf Fehler als optische Prüfeinheit, als Wirbelstromprüfeinheit oder als Streuflusserkennungseinheit ausgebildet ist. Alle drei Optionen ermöglichen eine zuverlässige und berührungslose, und daher zerstörungsfreie und nicht Material-ermüdende Überprüfung.

Eine weitere Ausführungsform der Erfindung besteht darin, dass die Prüfeinheit und die Laser-Markiereinheit nebeneinander angeordnet sind, und wobei insbesondere die Prüfeinheit, in Bewegungsrichtung des Federdrahts gesehen, vor oder nach der Laser-Markiereinheit angeordnet ist. Durch diese Ausführung ist es möglich, dass der Federdraht im laufenden Prozess zuverlässig überprüft und markiert werden kann, ohne den Produktionsprozess zu verlangsamen, anzuhalten oder zu reversieren. Die Laser-Markierung kann, wenn die Prüfeinheit in Bewegungsrichtung des Federdrahts vor der Laser-Markiereinheit angeordnet ist, an der Stelle des Federdrahts, an der ein Fehler festgestellt wird, davor oder danach aufgebracht werden. Wenn die Prüfeinheit in Bewegungsrichtung des Federdrahts nach der Laser-Markiereinheit angeordnet ist, wird die Laser-Markierung nach der Stelle des Federdrahts, an der ein Fehler festgestellt wird, aufgebracht. Wesentlich ist nur, dass die örtliche Beziehung zwischen Fehler und Laser-Markierung bekannt ist, damit bei der Weiterverarbeitung des Federdrahts die fehlerhaften Bereiche zuverlässig erkannt werden und eine versehentliche Weiterverarbeitung der fehlerhaften Bereiche des Federdrahts zu Federn ausgeschlossen ist.

Eine nach der Stelle des Federdrahts, an der ein Fehler festgestellt wird, aufgebrachte Laser-Markierung ist dann besonders vorteilhaft, wenn bei einer Weiterverarbeitung des Federdrahts zu Federn die Zuführrichtung des Federdrahts entgegengesetzt ist, sodass die Laser-Markierung zuerst erkannt werden kann und dann erst die eigentliche Fehlerstelle folgt.

Eine weitere Ausführungsform der Erfindung besteht darin, dass die Vorrichtung weiterhin eine Aufwickeleinheit, insbesondere eine Rolle, aufweist, auf die der Federdraht, einschließlich des/der mit einer oder mehreren Laser-Markierungen versehenen fehlerhaften Bereichs/Bereiche aufwickelbar ist.

Hierdurch ist gewährleistet, dass der hergestellte bzw. markierte Federdraht auf transportable Rollen aufgerollt wird, die dann zu weiterverarbeitenden Maschinen transportiert werden können. Dies stellt eine einfache und praktische Lager- und Transportmöglichkeit für den Federdraht dar.

Eine weitere Ausführungsform der Erfindung besteht darin, dass die Vorrichtung wenigstens eine Drahtführung aufweist, insbesondere eine erste, vor der Prüfeinheit und der Laser-Markiereinheit angeordnete Drahtführung und eine zweite, nach der Prüfeinheit und der Laser-Markiereinheit und vor der Aufwickelrolle angeordnete Drahtführung.

Durch die erste, vor der Prüfeinheit und der Laser-Markiereinheit angeordnete Drahtführung kann der Federdraht zuverlässig und stets in der richtigen Position an der Prüfeinheit und der Laser-Markiereinheit vorbei geführt werden.

Durch die zweite, nach der Prüfeinheit und der Laser-Markiereinheit und vor der Aufwickelrolle angeordnete Drahtführung kann der Federdraht, bei dem fehlerhafte Bereiche mit Laser-Markierungen versehen worden sind, gut auf der Aufwickelrolle aufgerollt werden. Durch ein Bewegen dieser Drahtführung kann ein gewünschtes Aufwickelmuster erreicht werden.

Gemäß einer Ausführungsform des Verfahrens, werden die fehlerhaften Bereiche des Federdrahts mittels einer Laser-Markiereinheit so markiert, dass jeder fehlerhafte Bereich jeweils mit der gleichen Laser-Markierung versehen wird. Dies stellt die einfachste erfindungsgemäße Markierungsvariante dar. Durch die Laser-Markierung ist jeder fehlerhafte Bereich zuverlässig gekennzeichnet.

Gemäß einer Ausführungsform des Verfahrens werden die fehlerhaften Bereiche des Federdrahts mittels einer Laser-Markiereinheit so markiert, dass jeder fehlerhafte Bereich jeweils mit einer eindeutig unterscheidbaren Laser-Markierung versehen wird. Dadurch ist jede Laser-Markierung eindeutig einem fehlerhaften Bereich zugeordnet.

Gemäß einer Ausführungsform des Verfahrens enthält die Laser-Markierung Zusatzinformationen über den jeweils markierten fehlerhaften Bereich. Durch solche Zusatzinformationen können neben der Information, dass der betreffende Bereich des Federdrahts fehlerhaft ist, noch viele weitere über die Art des Fehlers in den Federdraht eingebracht und für eine nachfolgende Feder-Herstellungsmaschine bereitgestellt werden, z. B. die Information, um den wievielten Fehler auf dem Federdraht es sich hierbei handelt, die Information über die Art des Fehlers, z. B. Material- oder Oberflächenfehler, weitere Informationen über die Art des Material- oder Oberflächenfehlers, oder Federdrahtabmessungen in dem fehlerhaften Bereich.

In einer weiteren Ausführungsform der Erfindung wird die Laser-Markierung so auf den oder die fehlerhaften Bereiche des Federdrahts aufgebracht, dass sie sich wenigstens über einen Großteil des Umfangs des Federdrahts, insbesondere über dessen gesamten Umfang erstreckt. Eine solche Laser-Markierung kann in einem nachfolgenden Verfahrensschritt besonders zuverlässig erkannt werden. Für das Einbringen einer solchen Laser-Markierung sind eine oder mehrere Laser-Markiereinheiten mit entsprechend breit projizierbarem Laser-Strahl vorzusehen.

In einer weiteren Ausführungsform der Erfindung wird die Laser-Markierung so auf den oder die fehlerhaften Bereiche des Federdrahts aufgebracht wird, dass sie sich nur über einen Teilbereich des Umfangs des Federdrahts erstreckt. Eine solche Laser-Markierung kann besonders einfach und kostengünstig erzeugt werden, da nur eine Laser-Markiereinheit mit entsprechend breit projizierbarem Laser-Strahl vorgesehen zu werden braucht.

Gemäß einer weiteren Ausführungsform des Verfahrens werden die Verfahrensschritte des Überprüfens des Federdrahts auf Fehler und des Markierens der fehlerhaften Bereiche des Federdrahts während einer kontinuierlichen Bewegung des gezogenen Drahts durchgeführt.

Durch diese Ausführungsform ist es möglich, die Produktivität der Federdrahtherstellung bzw. der Federdrahtmarkierung zu steigern. Standzeiten werden reduziert oder ganz vermieden.

Gemäß einer weiteren Ausführungsform des Verfahrens kann die Abtragstiefe der Laser-Markierung(en) über eine Änderung der Leistung der Laserquelle eingestellt werden.

Hierdurch ist gewährleistet, dass das Verfahren auch bei sehr dünnen Federdrähten eingesetzt werden kann.

In einer weiteren Ausführungsform der Erfindung weist die Laser-Markiereinheit eine Strahlquelle und/oder eine Scanneroptik oder eine Projektionsmaske und/oder einer Fokussiereinrichtung auf, die so ausgebildet ist/sind, dass sie auf den sich bewegenden Federdraht gerichtet sind. Eine solche Laser-Markiereinheit ist so ausgebildet, dass die Lasermarkierung entlang des gesamten fehlerhaften Bereichs eingebracht werden kann. Hierfür ist bzw. sind, wenn ein umfangsmäßig gesehen breiter Bereich und insbesondere ein Bereich des Federdrahts markiert werden soll, der sich um den gesamten Umfang des Federdrahts erstreckt, eine oder mehrere Laser-Markiereinheiten mit entsprechend breit projizierbarem Laser-Strahl vorzusehen. Eine weitere Ausführungsform des Verfahrens ist, dass das Überprüfen des Federdrahts auf Fehler mittels eines optischen Prüfverfahrens, mittels eines Wirbelstromprüfverfahrens oder mittels einer Streu-flussmessung erfolgt. Alle drei Optionen ermöglichen eine zuverlässige und berührungslose, daher zerstörungsfreie und nicht Material-ermüdende Überprüfung.

Die Erfindung betrifft auch eine Vorrichtung nach Anspruch 1, zum Herstellen von Federn aus einem Federdraht.

Gemäß einem Grundgedanken der vorliegenden Erfindung können durch die erfindungsgemäße Vorrichtung zum Herstellen von Federn aus einem Federdraht und durch das erfindungsgemäße Verfahren zum Herstellen von Federn aus einem Federdraht kontinuierlich und unterbrechungsfrei Federn hergestellt werden, wodurch sich geringe Maschinen-Stillstandszeiten, eine hohe Effektivität und geringe Herstellungskosten ergeben. Ein Unterbrechen des Feder-Herstellungsprozesses kann vermieden werden, indem fehlerhafte Federdrahtbereiche gleichermaßen zu Federn verarbeitet werden, die jedoch automatisch in ein anderes Ausgabebehältnis gelangen und somit aussortiert und einer Wiederverwendung zugänglich gemacht werden.

Fehlerhafte Bereiche des Federdrahts werden automatisch erkannt, sodass Qualitätsprobleme aufgrund nicht erkannter fehlerhafter Federn vermieden werden.

Mit Hilfe der Federdraht-Zuführeinheit kann eine Federdrahtrolle, deren fehlerhafte Bereiche mit Laser-Markierungen gekennzeichnet sind, verwendet werden und den zur benötigten Federdraht liefern.

Durch die Erkennungseinheit wird ermöglicht, dass die Laser-Markierung maschinell eingelesen werden kann. Fehlerhafte Bereichen können durch eine Erkennungseinheit schneller und sicherer erkannt werden, als es einem Facharbeiter möglich ist.

Mit der Federherstellungseinheit ist es der Vorrichtung möglich, den Federdraht automatisch zu Federn zu verarbeiten. Eine solche Federherstellungseinheit wird auch als Federwindeautomat bezeichnet und braucht hier nicht weiter erläutert zu werden, da sie dem Fachmann bekannt ist.

Mit Hilfe der Ausgabeeinheit werden die produzierten Federn automatisch in Federn aus fehlerfreiem Federdraht und in Federn aus fehlerhaftem Federdraht sortiert. Diese Einteilung erfolgt im Produktionsprozess in-line hinter der Federherstellungseinheit, wodurch die Produktion zu keinem Zeitpunkt gestoppt werden muss. Dies führt zu einer erhöhten Produktivität und einer Kosteneinsparung.

Die Behälter unter der Ausgabeeinheit können innerhalb kürzester Zeit ausgetauscht werden, sobald diese gefüllt sind. Der Austausch kann im laufenden Prozess erfolgen, wenn der leere Behälter den gefüllten Behälter aus der Vorrichtung schiebt. Ein zeiteffektiverer Produktionsablauf ist so gewährleistet.

Eine weitere Ausführungsform der Vorrichtung besteht darin, dass die Behälter mit einem Sensor ausgestattet sind, der so ausgebildet ist, dass er die Anzahl der in dem Behälter befindlichen Federn erfasst.

In einer weiteren Ausführungsform der Vorrichtung ist die Position der Weiche zwischen zwei Positionen veränderbar, nämlich einer ersten Position, in der Federn, die aus Federdraht ohne Laser-Markierung hergestellt worden sind, in einen Behälter mit fehlerfreien Federn, gelangen, und einer zweiten Position, in der Federn, die aus Federdraht mit Laser-Markierung hergestellt worden sind, in einen Behälter mit fehlerhaften Federn gelangen.

Mit der erfindungsgemäßen Vorrichtung und dem erfindungsgemäßen Verfahren zum Herstellen von Federn aus einem Federdraht können eine Vielzahl von Federn von verschiedenen Federtypen hergestellt werden, insbesondere Druckfedern, Zugfedern, Drehstabfedern, Drehfedern oder Spiralfedern.

Gemäß einer weiteren Ausführungsform der Vorrichtung weist diese weiterhin eine mit der Erkennungseinheit und der Ausgabeeinheit verbundene Steuereinheit auf, die so ausgebildet ist, dass sie im Betrieb der Vorrichtung von der Erkennungseinheit Signale über fehlerhafte Bereiche des Federdrahts erhält und die Ausgabeeinheit so ansteuert, dass diejenigen Federn, die aus dem fehlerhaften Bereich des Federdrahts hergestellt worden sind, in den zweiten Bereich, insbesondere den Behälter mit fehlerhaften Federn gelangen.

Durch die Steuereinheit ist gewährleistet, dass die fehlerhaften Federn automatisch in den Behälter mit fehlerhaften Federn gelangen.

In einer weiteren Ausführungsform der Vorrichtung ist die Erkennungseinheit als optische Erkennungseinheit, als Wirbelstrom-Erkennungseinheit oder als Streuflusserkennungseinheit ausgebildet. In dem Fall, dass die Laser-Markierungen als Vertiefungen in der Oberfläche des Federdrahts ausgebildet sind, ermöglichen alle drei Optionen eine zuverlässige und berührungslose Erkennung von mit Lasermarkierungen versehenen fehlerhaften Federdrahtbereichen. In dem Fall, dass die Laser-Markierungen als farblich veränderte Bereiche der Oberfläche des Federdrahts ausgebildet sind, kann nur eine als optische Erkennungseinheit ausgebildete Erkennungseinheit die mit Lasermarkierungen versehenen fehlerhaften Federdrahtbereiche zuverlässig detektieren.

Eine weitere Ausführungsform der Vorrichtung weist eine Federherstellungseinheit mit einem Einzug auf, der nach der Erkennungseinheit angeordnet ist.

Die Erfindung betrifft auch ein Verfahren nach Anspruch 3, zum Herstellen von Federn aus einem Federdraht.

Die oben mit Bezug auf die Vorrichtung zum Herstellen von Federn aus einem Federdraht angegebenen Vorteile und Ausführungsformen treffen in gleicher Weise auf das erfindungsgemäße Verfahren zum Herstellen von Federn aus einem Federdraht zu. Diese werden, um Wiederholungen zu vermeiden, nicht noch einmal aufgeführt.

Die Erfindung betrifft auch einen Federdraht, nach Anspruch 12.

Bei einem solchen Federdraht können die fehlerhaften Bereiche direkt beim Herstellen von Federn daraus automatisch und zuverlässig erkannt werden. Bei entsprechender Einrichtung der Vorrichtung zum Herstellen von Federn aus einem Federdraht können fehlerhafte Federdrahtbereiche gleichermaßen zu Federn verarbeitet werden, die jedoch automatisch in ein anderes Ausgabebehältnis gelangen und somit aussortiert und einer Wiederverwendung zugänglich gemacht werden. Ein solcher erfindungsgemäßer Federdraht kann daher besonders effektiv und kostengünstig zu Federn verarbeitet werden.

Die Laser-Markierungen sind als vertiefte Oberflächenbereiche des Federdrahts ausgebildet und die Vertiefung beträgt 10µm bis 1mm, gemessen von der nicht-vertieften Oberfläche zur Längsmittelachse.

In einer weiteren Ausführungsform des Federdrahts bildet die Laser-Markierung einen maschinenlesbaren Code, insbesondere einen Strichcode, einen Barcode oder einen Data-Matrix-Code, oder einen maschinenlesbaren Text, und/oder wobei jeder fehlerhafte Bereich jeweils mit der gleichen Laser-Markierung versehen ist, oder wobei jeder fehlerhafte Bereich jeweils mit einer eindeutig unterscheidbaren Laser-Markierung versehen ist, und/oder wobei die Laser-Markierung Zusatzinformationen über den jeweils markierten fehlerhaften Bereich enthält.

In einer weiteren Ausführungsform des Federdrahts erstreckt sich die Laser-Markierung wenigstens über einen Großteil des Umfangs des Federdrahts, insbesondere über dessen gesamten Umfang, oder wobei sich die Laser-Markierung nur über einen Teilbereich des Umfangs des Federdrahts erstreckt.

Für die Vorteile dieser Ausführungsformen wird Bezug genommen auf die oben bezüglich der Vorrichtung und des Verfahrens zum Herstellen eines Federdrahts angegebenen Vorteile, um Wiederholungen zu vermeiden.

Die Erfindung ist nachfolgend anhand von Ausführungsbeispielen mit Bezug auf die beiliegenden Figuren näher erläutert:
Figur 1 zeigt eine schematische Darstellung einer Federdraht-Herstellungsvorrichtung gemäß einem ersten Ausführungsbeispiel der vorliegenden Erfindung;
Figur 2 zeigt eine schematische Ansicht einer Federdraht-Markierungsvorrichtung, gemäß einem zweiten Ausführungsbeispiel der vorliegenden Erfindung;
Figur 3 zeigt eine schematische Darstellung der Laser-Markiereinheit der Federdraht-Herstellungsvorrichtung aus Figur 1 oder der Federdraht-Markierungsvorrichtung aus Figur 2 und des daran vorbeigeführten Federdrahts, dessen fehlerhafte Bereiche mittels der Laser-Markiereinheit markiert werden;
Figur 4 zeigt anhand ihrer vier Teilfiguren 4(a), 4(b), 4(c) und 4(d) jeweils einen Längs- und einen Querschnitt durch exemplarische Bereiche eines Federdrahts;
Figur 5 zeigt anhand ihrer zwei Teilfiguren 5(a) und 5(b) jeweils eine schematische Darstellung eines Federdrahts, bei dem vier fehlerhafte Bereiche entlang der Längserstreckung des Federdrahts mit Laser-Markierungen versehen worden sind;
Figur 6 zeigt anhand ihrer Teilfiguren Figur 6(a), Figur 6(b) und Figur 6(c) exemplarische Darstellungen von fehlerhaften Federdrahtbereichen mit unterschiedlichen Laser-Markierungen; und
Figur 7 zeigt eine schematische Darstellung einer Vorrichtung zum Herstellen von Federn aus einem Federdraht, gemäß einem weiteren Ausführungsbeispiel der Erfindung.

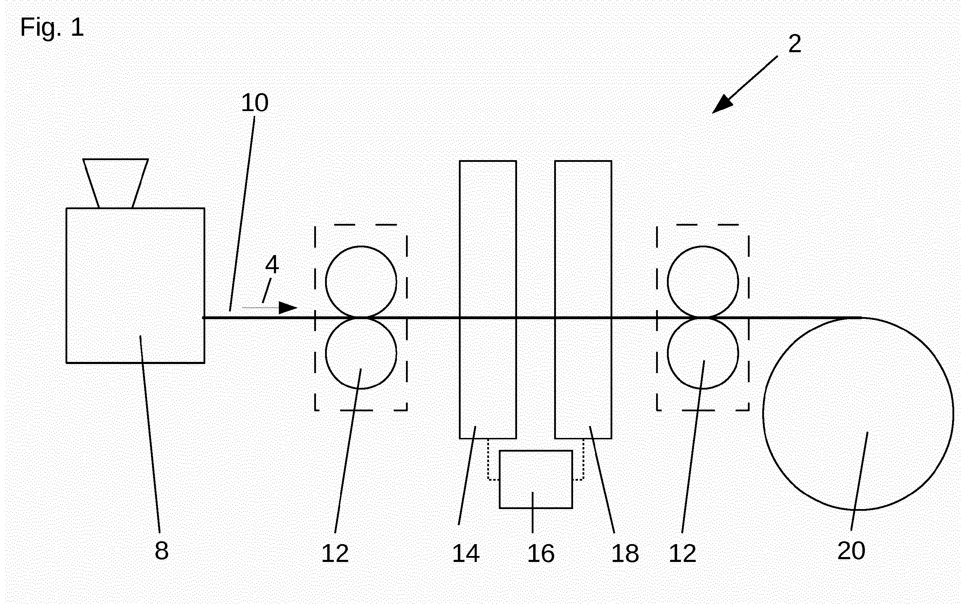

Figur 1 zeigt eine schematische Darstellung einer Federdraht-Herstellungsvorrichtung 2.

Die Federdraht-Herstellungsvorrichtung 2 umfasst eine Drahtherstellungseinrichtung 8, eine erste Drahtführung 12, eine Prüfeinheit 14, eine Laser-Markiereinheit 18, eine Steuereinheit 16, eine weitere Drahtführung 12 und eine Aufwickelrolle 20.

Die Drahtherstellungseinrichtung 8 ist so ausgebildet, dass ein Federdraht 10 aus einem Rohmaterial, insbesondere durch Ziehen, herstellbar ist. Dies ist dem Fachmann bekannt und braucht hier nicht weiter erläutert zu werden.

Der Federdraht 10 wird von der Drahtherstellungseinrichtung 8 kontinuierlich hergestellt, verlässt diese in Figur 1 in Richtung nach rechts und durchläuft nacheinander die erste Drahtführung 12, die Prüfeinheit 14 sowie die Laser-Markiereinheit 18, die weitere Drahtführung 12 und wird schließlich auf der Aufwickelrolle 20 aufgerollt. Die Laufrichtung des Federdrahts 10, die in Figur 1 von links nach rechts verläuft, ist mittels des Pfeils mit dem Bezugszeichen 4 dargestellt.

Durch die vor der Prüfeinheit 14 angeordnete Drahtführung 12 und durch die nach der Laser-Markiereinheit 18 angeordneten Drahtführung 12 wird der Federdraht 10 so präzise geführt, dass die insbesondere stationär angeordnete Prüfeinheit 14 den Federdraht 10 präzise überprüfen und die insbesondere stationär angeordnete Laser-Markiereinheit 18 fehlerhafte Bereiche des Federdrahts 10 präzise markieren kann.

Die Drahtführungen 12 können dadurch insbesondere als ein paar von gegenläufigen Führungsrollen ausgebildet sein, zwischen denen der Federdraht 10 verläuft.

Die Prüfeinheit 14 ist so ausgebildet, dass sie den Federdraht 10 auf Fehler, insbesondere auf Material- und Oberflächenfehler überprüft. Dabei kann die Prüfeinheit 14 entweder als optische Prüfeinheit oder als Wirbelstrom-Prüfeinheit ausgebildet sein.

Im Betrieb der Federdraht-Herstellungsvorrichtung 2 wird der Federdraht 10 kontinuierlich an der Prüfeinheit 14 und an der Laser-Markiereinheit 18 vorbeigeführt, die den Federdraht, während seiner Bewegung, auf Material- und Oberflächenfehler überprüfen und, falls solche Fehler festgestellt werden, die entsprechenden Bereiche des Federdrahts 10 mit einer Laser-Markierung 18 versehen.

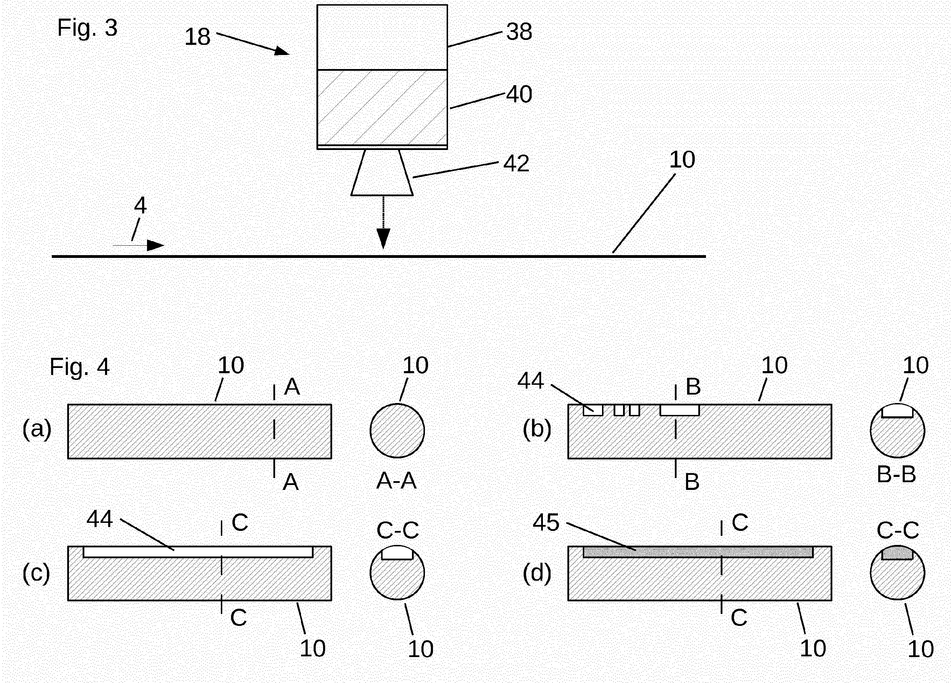

Wenn die Prüfeinheit 14 Material- oder Oberflächenfehler des Federdrahts 10 erkennt, gibt sie ein entsprechendes Signal an die Steuereinheit 16, die daraufhin die Laser-Markiereinheit 18, die ja in Laufrichtung des Federdrahts 10 nach der Prüfeinheit 14 angeordnet ist, so ansteuert, dass diese diese fehlerhaften Bereiche des Federdrahts 10 mit einer geeigneten Laser-Markierung versieht. Beispielhafte Laser-Markierungen sind nachfolgend in den Figuren 4 bis 6 dargestellt und beschrieben.

Die Laser-Markiereinheit 18 ist dabei so ausgebildet, dass die fehlerhaften Bereiche des Federdrahts 10 derart mit einer Laser-Markierung markiert werden, dass ein Teil der Oberfläche des Federdrahts 10 abgetragen wird, sodass der Federdraht 10 in den festgestellten fehlerhaften Bereichen eine oder mehrere Vertiefungen in seiner Oberfläche aufweist.

Hierfür richtet die Lasermarkiereinheit 18 einen Laserstrahl mit einer Temperatur oberhalb der Verdampfungstemperatur des Grundmaterials des Federdrahts 10 auf die zu markierenden Bereiche der Oberfläche des Federdrahts 10, so dass ein Teil des Materials des Federdrahts verdampft und eine entsprechende definierte Vertiefung in dem Federdraht 10 entsteht.

Gemäß einer nicht-beanspruchten Alternative ist die Laser-Markiereinheit 18 so ausgebildet, dass die fehlerhaften Bereiche des Federdrahts 10 derart mit einer Laser-Markierung markiert werden, dass ein Teil der Oberfläche des Federdrahts 10 gegenüber den angrenzenden Bereichen der Oberfläche des Federdrahts 10 farblich verändert wird. Hierfür richtet die Lasermarkiereinheit 18 einen Laserstrahl auf die entsprechenden Bereiche der Oberfläche des Federdrahts 10, der eine Anlasstemperatur zwischen 200 und 660 °C in der Oberfläche des Federdrahts 10 bewirkt, so dass sich eine Oxidschicht einstellt, deren Farbe von der jeweiligen Anlasstemperatur abhängt und an anderer Stelle dieser Patentanmeldung beschrieben ist.

Die Laser-Markiereinheit 18 ist dafür auf den sich bewegenden Federdraht 10 gerichtet und trägt, wenn sie von der Steuereinheit 16 entsprechend angesteuert wird, mittels eines auf den Federdraht 10 gerichteten Laserstrahls einen Teil der Oberfläche des Federdrahts 10 ab bzw. verändert die Farbe in dem Teil der Oberfläche des Federdrahts 10.

Hierfür verfügt die Laser-Markiereinheit 18 über eine Strahlquelle und kann zusätzlich noch über eine Scanner-Optik oder eine Projektionsmaske und eine Fokussier-Einrichtung verfügen, die nachfolgend mit Bezug auf die Figur 3 exemplarisch dargestellt sind.

Wenn die Prüfeinheit 14 keine Material- oder Oberflächenfehler des Federdrahts 10 feststellt, so wird die Laser-Markiereinheit 18 so von der Steuereinheit 16 angesteuert, dass diese keine Laser-Markierungen in den Federdraht 10 einbringt.

Schließlich wird der fertig hergestellte Federdraht 10, dessen fehlerhafte Bereiche mit Laser-Markierungen versehen worden sind, auf der Aufwickelrolle 20 aufgerollt.

Am Ende des Herstellungsprozesses wird entweder kein Rohmaterial mehr in die Draht-Herstellungseinrichtung 8 nachgefüllt, sodass der Herstellungsprozess von selbst ausläuft. Alternativ dazu kann der Federdraht 10 auch, ggf. nach Anhalten des Produktionsprozesses, abgeschnitten oder abgelängt werden. Die Aufwickelrolle 20 mit dem darauf aufgewickelten Federdraht 10 kann danach komplett entnommen und zu einer Feder-Herstellungsvorrichtung transportiert werden. Dann kann eine neue leere Aufwickelrolle anstelle der entnommenen Aufwickelrolle für den nächsten Herstellungsprozess bereitgestellt werden.

An dieser Stelle wird noch einmal betont, dass das Überprüfen des Federdrahts 10 und das Markieren von fehlerhaften Bereichen des Federdrahts 10 durch die Prüfeinheit 14 und die Laser-Markiereinheit 18 in-line, also während des Herstellungsprozesses, erfolgt, ohne dass dieser verlangsamt oder gar angehalten werden muss. Dies stellt eine besonders effektive, schnelle und kostengünstige Weise dar, Federdraht 10 herzustellen, bei dem gleichzeitig die fehlerhaften Bereiche für den nachfolgenden Feder-Herstellungsprozess auf einfache Weise und unmittelbar erkennbar sind.

Es versteht sich von selbst, dass die Steuereinheit 16 zusätzlich mit der Draht-Herstellungseinrichtung 8 oder der Zuführrolle 22 sowie mit der Aufwickelrolle 20 verbunden sein kann bzw. mit einer Steuereinheit der Draht-Herstellungseinrichtung 8, der Zuführrolle 22 sowie der Aufwickelrolle 20 verbunden sein kann oder integriert mit dieser ausgebildet sein kann, sodass auch die eigentliche Drahtherstellung, die Vorschubgeschwindigkeit des Federdrahts 10 und das Aufwickeln des Federdrahts 10 auf der Aufwickelrolle 20 gesteuert werden können.

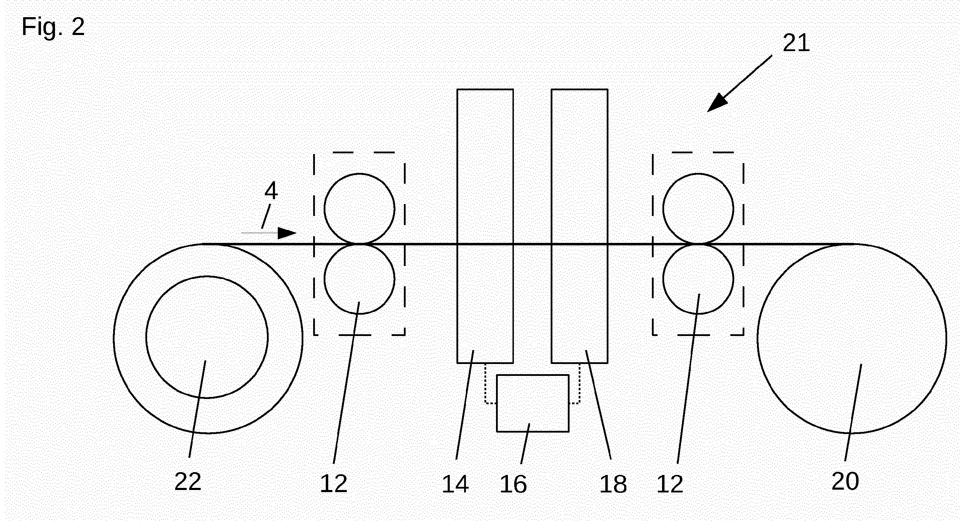

Figur 2 zeigt eine schematische Ansicht einer Federdraht-Markierungsvorrichtung 21.

Diese Federdraht-Markierungsvorrichtung 21 entspricht im Wesentlichen der in Figur 1 gezeigten Federdraht-Herstellungsvorrichtung 2, wobei anstelle der Draht-Herstellungseinrichtung 8 eine Zuführrolle 22 vorgesehen ist.

Gleiche Elemente sind mit gleichem Bezugszeichen versehen. Zur Vermeidung von Wiederholungen werden diese Elemente sowie deren Funktionsweise nicht noch einmal erläutert.

Die Zuführrolle 22 führt den in einem zuvor durchgeführten Herstellungsschritt hergestellten, insbesondere aus einem Rohmaterial gezogenen Federdraht über die Drahtführung 12 der Prüfeinheit 14 und der Laser-Markiereinheit 18 zu, wo der Federdraht 10 überprüft und fehlerhafte Bereiche desselben markiert werden, bevor der Federdraht 10 durch die zweite Drahtführung 12 zu der Aufwickelrolle 20 geführt und dort aufgewickelt wird.

Der Hauptunterschied zwischen der Federdraht-Herstellungsvorrichtung 2 aus Fig. 1 und der Federdraht-Markierungsvorrichtung 21 aus Fig. 2 besteht darin, dass bei der Federdraht-Herstellungsvorrichtung 2 die Draht-Herstellungseinrichtung 8 den ersten Teil bildet, so dass in ein- und derselben Vorrichtung der Federdraht 10 hergestellt wird und fehlerhafte Bereiche desselben detektiert und markiert werden. Hingegen wird bei der Federdraht-Markierungsvorrichtung 21 ein bereits hergestellter Federdraht 10 bereitgestellt, der üblicherweise auf einer Rolle 22 aufgewickelt ist, und dieser Federdraht 10 wird über die Drahtführung 12 der Prüfeinheit 14 und der Lasermarkiereinheit 18 zugeführt. Das Herstellen des Federdrahts und das Detektieren der fehlerhaften Bereiche erfolgt somit bei der Federdraht-Markierungsvorrichtung 21 an zwei verschiedenen Orten.

Figur 3 zeigt eine schematische Darstellung der Laser-Markiereinheit 18 und des daran vorbeigeführten Federdrahts 10, dessen fehlerhafte Bereiche mittels der Laser-Markiereinheit 18 markiert werden.

Die Laser-Markiereinheit 18 verfügt über eine Strahlquelle 38 zum Erzeugen eines Laserstrahls, über eine Scanner-Optik 40 oder eine Projektionsmaske und über eine Fokussier-Einrichtung 42. Die Laser-Markiereinheit 18 ist dabei so angeordnet, dass sie auf den sich bewegenden Federdraht 10 gerichtet und so ausgebildet ist, dass der Laserstrahl, wenn er auf den sich bewegenden Federdraht 10 gerichtet ist, Bereiche der Oberfläche desselben abtragen kann, um eine Laser-Markierung, die eine Vertiefung in der Oberfläche des Federdrahts 10 ausbildet, in den Federdraht 10 einzubringen. In einer nicht-beanspruchten Alternative ist die Laser-Markiereinheit 18 so ausgebildet, dass der Laserstrahl, wenn er auf den sich bewegenden Federdraht 10 gerichtet ist, durch den Anlasseffekt, der aufgrund von Gefügeänderungen in der Randschicht entsteht, diesen Oberflächenbereich farblich verändern kann, um eine Lasermarkierung in den Federdraht 10 einzubringen. Wie die Strahlquelle 38, die Scanner-Optik 40 oder die Projektionsmaske und die Fokussier-Einrichtung 42 im Einzelnen ausgebildet sein müssen, damit dies der Fall ist, ist dem Fachmann bekannt und braucht hier nicht weiter erläutert zu werden.

Figur 4 zeigt anhand ihrer vier Teilfiguren 4(a), 4(b), 4(c) und 4(d) jeweils einen Längs- und einen Querschnitt durch exemplarische Bereiche eines Federdrahts 10.

In den Teilfiguren 4 (a), 4(b), 4(c) und 4(d) ist jeweils in dem Längsschnitt eine Schnittlinie A-A dargestellt, und der Querschnitt stellt einen Schnitt entlang dieser Schnittlinie A-A dar.

Gemäß Teilfigur 4(a) hat der dargestellte Bereich des Federdrahts 10 ein konstantes längliches Profil und weist keine Material- oder Oberflächenfehler auf, sodass dieser Bereich des Federdrahts 10 keine Laser-Markierung hat.

Gemäß den Teilfiguren 4(b), 4(c) und 4(d) weisen die dargestellten Bereiche des Federdrahts 10 hier nicht dargestellte Material- oder Oberflächenfehler auf und sind daher jeweils durch die Laser-Markiereinheit 18 mit einer Laser-Markierung 44 versehen worden.

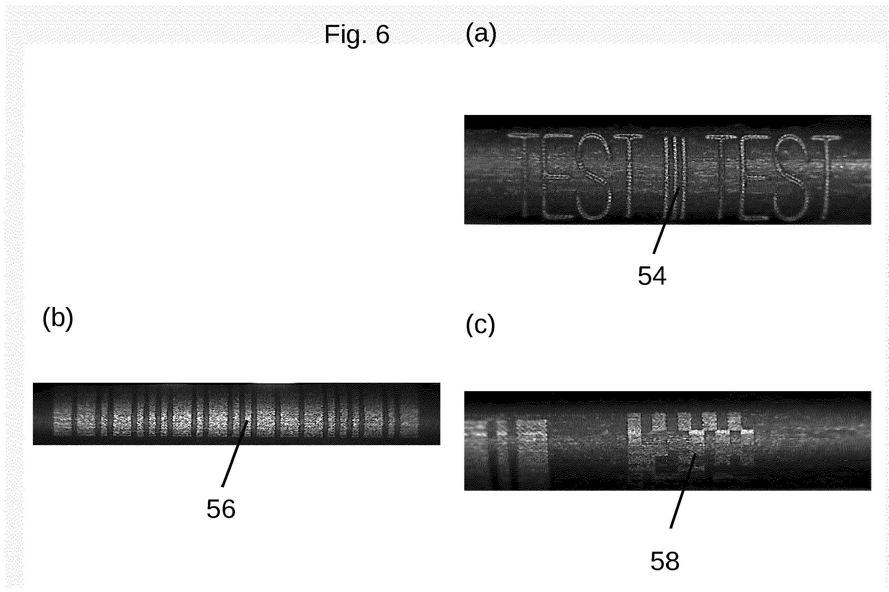

Im Längsschnitt der Teilfigur 4(b) ist zu sehen, dass die Laser-Markierung 4 voneinander beabstandete Vertiefungen aufweist, die jeweils nur in einen oberen Bereich des Federdrahts 10 eingebracht worden sind. Bei einer solchen Laser-Markierung mit mehreren eingebrachten Vertiefungen kann es sich um einen eingebrachten maschinenlesbaren Code handeln, wie dies nachfolgend mit Bezug auf Figur 6 näher erläutert wird.

Gemäß Teilfigur 4(c) handelt es sich bei der aufgebrachten Laser-Markierung 44 um eine durchgehende längliche Vertiefung, die an der Oberseite des oberen Bereichs des Federdrahts 10 eingebracht worden ist. Hierbei handelt es sich um eine längliche Markierung an der Oberseite des Federdrahts 10, die von einer optischen Erkennungseinheit oder von einem Betrachter als ein Längs-Strich oder Längs-Balken wahrgenommen wird.

Gemäß Teilfigur 4(d) handelt es sich bei der aufgebrachten Lasermarkierung 45 um einen nicht-beanspruchten, durch Anlassen mittels eines Laserstrahls farblich veränderten Oberflächenbereich, der an der Oberseite des oberen Bereichs des Federdrahts 10 eingebracht worden ist.

Hierbei handelt es sich um eine längliche Markierung an der Oberseite des Federdrahts 10, die wie bei Teilfigur 4(c) von einer optischen Erkennungseinheit oder von einem Betrachter als ein Längs-Strich oder Längs-Balken wahrgenommen wird.

Gemäß der nicht-beanspruchten Alternative kann die Oberfläche des Federdrahts 10 blank und von silbergrauer Farbe sein, wohingegen die Lasermarkierung 45 eine braunrote Farbe aufweist, die mittels eines Laserstrahls mit einer Anlasstemperatur von etwa 250 °C in die Oberfläche des Federdrahts 10 eingebracht worden ist. Hierdurch ergibt sich ein optisch sehr gut wahrnehmbarer/detektierbarer Kontrast. Selbstverständlich kann die Grundfarbe der Oberfläche des Federdrahts 10 auch eine andere Farbe als silbergrau haben, und selbstverständlich kann die Farbe der Lasermarkierung 45 auch eine andere sein, zum Beispiel Weißgelb, Strohgelb, Goldgelb, Gelbbraun, Rot, Purpurrot, Violett, Dunkelblau, Kornblumenblau, Hellblau oder Blaugrau. Die hierfür erforderlichen Anlasstemperaturen sind an anderer Stelle dieser Patentanmeldung angegeben.

An dieser Stelle ist noch einmal betont, dass die eingebrachten Laser-Markierungen nicht den Zweck haben, den Federdraht 10 als solchen zu kennzeichnen, sondern vielmehr nur die fehlerhaften Bereiche markieren sollen, die in einem nachfolgenden Feder-Herstellungsprozess automatisch erkannt werden sollen, sodass die daraus hergestellten Federn automatisch ausgeschleust werden können.

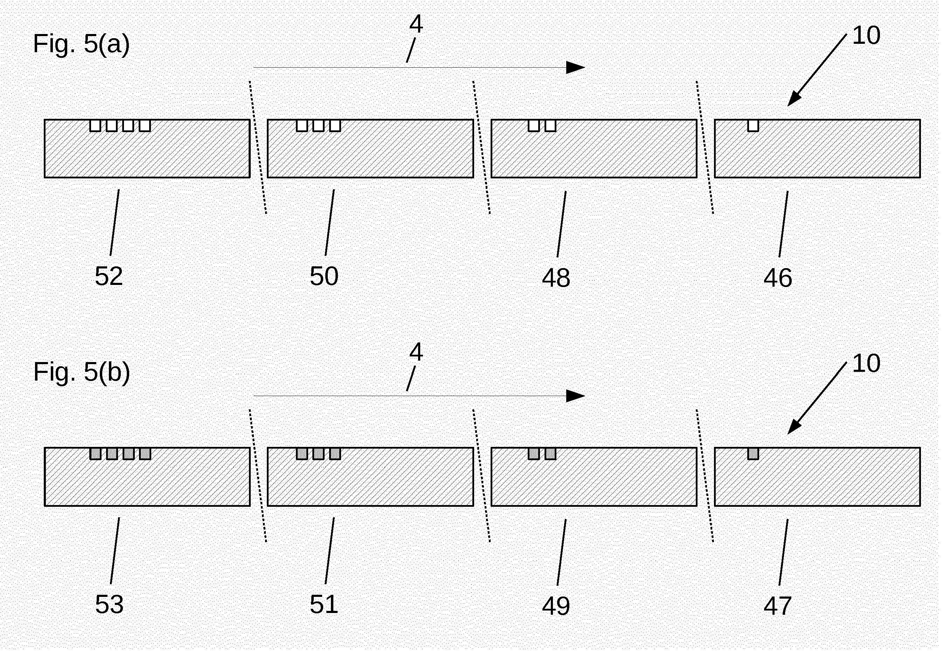

Figur 5 zeigt anhand ihrer zwei Teilfiguren 5(a) und 5(b) jeweils schematische Darstellung eines Federdrahts 10, bei dem vier fehlerhafte Bereiche entlang der Längserstreckung des Federdrahts 10 mit Laser-Markierungen 46, 48, 50 und 52 bzw. 47, 49, 51 und 53 versehen worden sind.

In der Teilfigur 5(a) sind die Lasermarkierungen 46, 48, 50 und 52 als Vertiefungen in der Oberfläche des Federdrahts 10 ausgeführt, die zum Beispiel mittels eines Laserstrahls mit einer Temperatur oberhalb der Verdampfungstemperatur des Grundmaterials des Federdrahts 10 erzeugt worden sind.

In der Teilfigur Fig. 5(b) sind die Lasermarkierungen 47, 49, 51 und 53 als nicht erfindungsgemäße abtragsfreie, farblich veränderte Oberflächenbereiche ausgeführt, die zum Beispiel mittels eines Laserstrahls mit einer definierten Temperatur in die Oberfläche des Federdrahts 10 eingebracht worden sind. Die durch verschiedene Anlasstemperaturen hervorgerufenen Farben der Oberflächenbereiche sind an anderer Stelle dieser Patentanmeldung erläutert. In der Praxis ist es wichtig, dass sich ein optisch gut wahrnehmbarer/detektierbarer Kontrast zwischen der Farbe der Oberfläche des Federdrahts 10 in den Lasermarkierungen 47, 49, 51 und 53 und den benachbarten Bereichen der Oberfläche des Federdrahts 10 ergibt.

Die zuvorderst, also in den Fig. 5(a) und Fig. 5(b) ganz rechts angeordnete Laser-Markierung 46 bzw. 47 umfasst eine quer verlaufende Laser-Markierung an der Oberseite des Federdrahts 10, die von einer Erkennungseinrichtung oder einem Betrachter als Querstrich wahrgenommen wird.

Die von vorne gesehen zweite Laser-Markierung 48 bzw. 49 umfasst zwei voneinander getrennte, quer verlaufende Laser-Markierungen an der Oberseite des Federdrahts 10, die von einer Erkennungseinrichtung oder einem Betrachter als zwei parallele Querstriche wahrgenommen werden.

Die von vorne gesehen dritte Laser-Markierung 50 bzw. 51 umfasst drei voneinander getrennte, quer verlaufende Laser-Markierungen in der Oberseite des Federdrahts 10, die von einer Erkennungseinrichtung oder einem Betrachter als drei Querstriche wahrgenommen werden.

Die hinterste Laser-Markierung 52 bzw. 53 umfasst vier voneinander getrennte, quer verlaufende Laser-Markierungen in der Oberseite des Federdrahts, die von einer Erkennungseinrichtung oder einem Betrachter als vier Querstriche wahrgenommen werden.

Dementsprechend ist jeder fehlerhafte Bereich des Federdrahts 10 mit einer eindeutig unterscheidbaren Laser-Markierung 46 - 52 versehen, die im vorliegenden Ausführungsbeispiel nur exemplarisch sind. Z. B. können der ersten Markierung 46 bzw. 47 die Bedeutung "erster fehlerhafter Bereich im gesamten Federdraht", der zweiten Laser-Markierung 48 bzw. 49 die Bedeutung "zweiter fehlerhafter Bereich im gesamten Federdraht", u.s.w. zugeordnet werden.

Figur 6 zeigt anhand ihrer Teilfiguren Figur 6(a), Figur 6(b) und Figur 6(c) exemplarische Darstellungen von fehlerhaften Federdrahtbereichen mit unterschiedlichen Laser-Markierungen.

Alle diese Laser-Markierungen haben gemeinsam, dass die eingebrachten Markierungen Vertiefungen in der Oberfläche des Federdrahts 10 darstellen. In der nicht-beanspruchten Alternative handelt es sich um farblich veränderte Bereiche der Oberfläche des Federdrahts 10.

Die Laser-Markierung 54 bildet ein in die Oberfläche des Federdrahts 10 eingebrachtes Muster, das von einer Erkennungseinrichtung oder einem Betrachter als "TEST, drei Querstriche, TEST" wahrgenommen wird, also als dritte aufgebrachte Test-Laser-Markierung, die einen fehlerhaften Bereich des Federdrahts 10 kennzeichnet.

Die Laser-Markierung 56 bildet einen Barcode, der sich nicht wie die vorstehend beschriebenen Laser-Markierungen nur über die Oberseite des Federdrahts 10, sondern um den gesamten Umfang des Federdrahts 10 erstreckt. Dabei bildet die Laser-Markierung 56 ein Muster von umfangsmäßigen Vertiefungen oder in der nicht erfindungsgemäßen Alternative farblich veränderten Bereichen unterschiedlicher Breite mit jeweils dazwischen angeordneten Federdrahtbereichen mit dem ursprünglichen, nicht vertieften Umfang bzw. der nicht vertieften Höhe bzw. mit jeweils dazwischen angeordneten Federdrahtbereichen, die farblich unverändert sind.

Die dermaßen als Barcode ausgeprägte Laser-Markierung 56 kann insbesondere von einer Erkennungseinrichtung erkannt werden. Mittels einer solchen Barcode-Laser-Markierung 56 können neben der Information, dass der betreffende Bereich des Federdrahts 10 fehlerhaft ist, noch viele weitere Zusatzinformationen über die Art des Fehlers in den Federdraht 10 eingebracht und für eine nachfolgende Feder-Herstellungsmaschine bereitgestellt werden, z. B. die Information, um den wievielten Fehler auf dem Federdraht 10 es sich hierbei handelt, die Information über die Art des Fehlers, z. B. Material- oder Oberflächenfehler, weitere Informationen über die Art des Material- oder Oberflächenfehlers, oder Federdrahtabmessungen in dem fehlerhaften Bereich.

Die Laser-Markierung 58 bildet einen sog. Data-Matrix-Code, der sich nur über einen Bereich des Umfangs des Federdrahts 10 erstreckt und der ein Muster von Vertiefungen oder farblich veränderten Bereichen ausbildet, die in die Oberfläche des Federdrahts 10 eingebracht worden sind.

Eine solche als Data-Matrix-Code ausgebildete Laser-Markierung kann insbesondere durch eine Erkennungseinheit erkannt werden. Mit einer solchen Laser-Markierung 58 können, ähnlich wie bei der als Barcode ausgebildeten Laser-Markierung 56, eine Vielzahl von Informationen über den fehlerhaften Bereich in den Federdraht 10 eingebracht und für eine nachfolgende Feder-Herstellungsmaschine bereitgestellt werden.

Es versteht sich von selbst, dass die Laser-Markiereinheit 18 so ausgebildet sein muss, dass sie Laser-Markierungen in den umfangsmäßigen Bereich des Federdrahts 10 einbringen kann, in dem die Laser-Markierung erzeugt werden soll.

Hierfür ist bzw. sind, wenn ein umfangsmäßig gesehen breiter Bereich und insbesondere ein Bereich des Federdrahts markiert werden soll, der sich um den gesamten Umfang des Federdrahts 10 erstreckt, eine oder mehrere Laser-Markiereinheiten 18 mit entsprechend breit projizierbarem Laser-Strahl vorzusehen.

Bei einem ganz einfachen, hier nicht durch eine gesonderte Figur dargestellten Ausführungsbeispiel ist die Laser-Markiereinheit 18 so ausgebildet, dass sie jeden fehlerhaften Bereich mit einer einfachen, jeweils gleichen Laser-Markierung versieht.

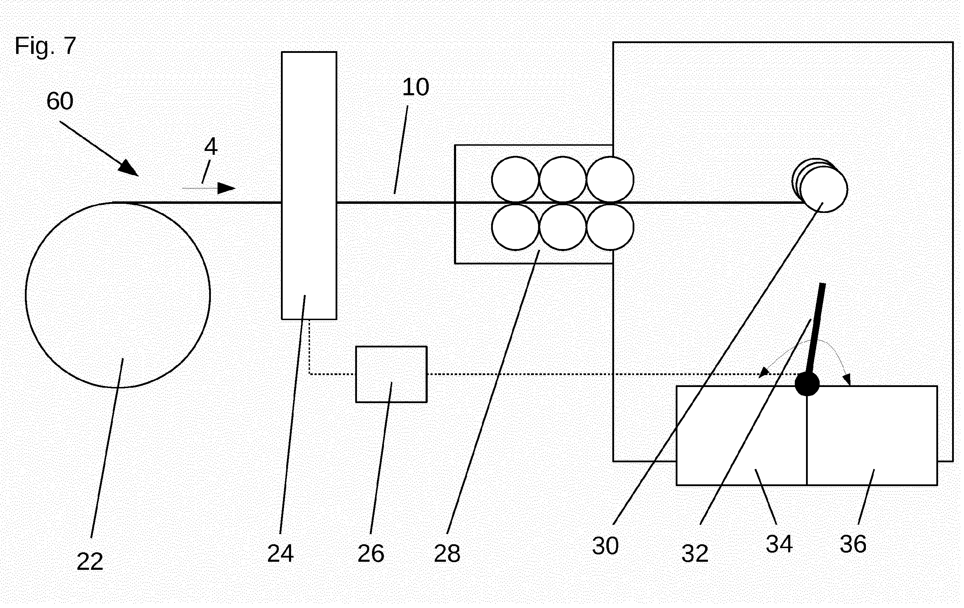

Figur 7 zeigt eine schematische Darstellung einer Vorrichtung 60 zum Herstellen von Federn aus einem Federdraht, gemäß einem weiteren Ausführungsbeispiel der Erfindung.

Diese Feder-Herstellungsvorrichtung 60 umfasst eine Zuführrolle 22, eine Erkennungseinheit 24, eine Federdraht-Zuführeinheit 28, eine Feder-Herstellungseinheit 30, eine Ausgabeeinheit 32 mit einem Behältnis für defekte Federn 34 und einem Behältnis für intakte Federn 36, sowie eine Steuereinheit 26.

Bei der Zuführrolle 22 kann es sich um die Aufwickelrolle 20 handeln, auf der der hergestellte Federdraht 10 aufgewickelt worden ist und dessen fehlerhafte Bereiche mit entsprechenden Laser-Markierungen versehen worden sind.

Dieser Federdraht 10 wird durch eine Erkennungseinheit 24 hindurch und über die Federdraht-Zuführeinheit 28 zu der eigentlichen Feder-Herstellungseinheit 30 geführt, wo der Federdraht umgeformt, insbesondere gewunden und zu einzelnen Federn abgelängt wird, die dann über einen hier nicht gezeigten Ausgabeschacht zu der Ausgabeeinheit 32 gelangen.

Die Erkennungseinheit 24 ist dabei so ausgebildet, dass sie Laser-Markierungen auf dem Federdraht 10 erkennt, während dieser kontinuierlich durch sie durchgeführt wird. Die Erkennungseinheit 24 kann dabei als optische Erkennungseinheit, als Wirbelstrom-Erkennungseinheit oder als Streuflusserkennungseinheit ausgebildet sein. In dem Fall, dass die Laser-Markierungen als Vertiefungen in der Oberfläche des Federdrahts ausgebildet sind, wie in den Darstellungen der Figuiren 4 (b), 4 (c) und 5 (a), ermöglichen alle drei Optionen eine zuverlässige und berührungslose Erkennung von mit Lasermarkierungen versehenen fehlerhaften Federdrahtbereichen. In dem nicht beanspruchten Fall, dass die Laser-Markierungen als farblich veränderte Bereiche der Oberfläche des Federdrahts ausgebildet sind, wie in den Darstellungen der Figuren 4 (d) und 5 (b), kann nur eine als optische Erkennungseinheit ausgebildete Erkennungseinheit die mit Lasermarkierungen versehenen fehlerhaften Federdrahtbereiche zuverlässig detektieren.

Die Ausgabeeinheit 32 verfügt über eine in Figur 7 schematisch dargestellte Weiche, die so bewegt werden kann, dass sich insbesondere durch deren Schwerkraft durch den Ausgabeschacht bewegende Federn gezielt in das Behältnis für defekte Federn 34 oder in das Behältnis für intakte Federn 36 gelangen.

Wenn nun die Erkennungseinheit 24 eine Laser-Markierung auf dem Federdraht 10 erkennt, gibt sie ein entsprechendes Signal an die Steuereinheit 26 aus, die wiederum die Weiche der Ausgabeeinheit 32 so stellt, dass diejenigen Federn, die aus dem Federdraht 10 mit Laser-Markierung hergestellt worden sind, in das Behältnis für defekte Federn 34 gelangen. Wenn die Erkennungseinheit 24 keine Laser-Markierung auf dem Federdraht 10 erkennt, verbleibt die Weiche der Ausgabeeinheit 32 in derjenigen Stellung, in der die hergestellten Federn automatisch in das Behältnis für intakte Federn 36 gelangen, oder wird in diese Stellung bewegt, falls von der Erkennungseinheit 24 zuvor noch eine Laser-Markierung erkannt worden ist.

Bei der erfindungsgemäßen Feder-Herstellungsvorrichtung 60 ist eine kontinuierliche und unterbrechungsfreie Herstellung von Federn aus einem Federdraht 10 möglich. Fehlerhafte Bereiche des Federdrahts werden automatisch erkannt, die Feder-Herstellungsvorrichtung 60 muss jedoch nicht angehalten werden, was Maschinen-Stillstandszeiten, eine verminderte Effektivität sowie höhere Kosten zur Folge hätte. Vielmehr werden die aus solchen fehlerhaften Bereichen des Federdrahts 10 hergestellten Federn automatisch in ein anderes Behältnis, nämlich das Behältnis für defekte Federn 34 verbracht.

### Bezugszeichenliste

- 2: Federdraht-Herstellungsvorrichtung
- 4: Laufrichtung Draht
- 8: Drahtherstellungseinrichtung
- 10: Federdraht
- 12: Drahtführung
- 14: Prüfeinheit
- 16: Steuereinheit
- 18: Laser-Markiereinheit
- 20: Aufwickelrolle
- 21: Federdraht-Markierungsvorrichtung
- 22: Zuführrolle
- 24: Erkennungseinheit
- 26: Steuereinheit für Ausgabeeinheit
- 28: Federdraht-Zuführeinheit
- 30: Federherstellungseinheit
- 32: Ausgabeeinheit
- 34: Behältnis für defekte Federn
- 36: Behältnis für intakte Federn
- 38: Strahlquelle
- 40: Scanneroptik
- 42: Fokussiereinrichtung
- 44-58: Laser-Markierungen
- 60: Feder-Herstellungsvorrichtung

## Patentansprüche

1. Vorrichtung zum Herstellen von Federn aus einem Federdraht (60), aufweisend:
eine Federdraht-Zuführeinheit (28), insbesondere eine Zuführrolle (22), zum Zuführen von Federdraht (10), bei dem fehlerhafte Bereiche, insbesondere Bereiche mit Material- und Oberflächenfehlern, mit einer Laser-Markierung (44), die als Vertiefung in der Oberfläche des Federdrahts (10) im Bereich von 1µm bis 1mm ausgebildet ist, markiert sind;
eine Erkennungseinheit (24), die so ausgebildet ist, dass sie Laser-Markierungen (44) auf dem Federdraht (10) erkennt;
eine Federherstellungseinheit (30), insbesondere ein Windeautomat, die/der so ausgebildet ist, dass Federn aus dem Federdraht (10) kontinuierlich und unterbrechungsfrei herstellbar, insbesondere windbar und ablängbar sind;
eine Ausgabeeinheit (32), insbesondere ein Ausgabeschacht mit Weiche, die so ausgebildet ist, dass sie Federn, die aus Federdraht (10) ohne Laser-Markierung hergestellt worden sind, in einen ersten Bereich, insbesondere einen Behälter mit fehlerfreien Federn (36), ausgibt, und Federn, die aus Federdraht (10) mit Laser-Markierung (44) hergestellt worden sind, in einen zweiten Bereich, insbesondere einen Behälter mit fehlerhaften Federn (34), ausgibt.

2. Vorrichtung (60) nach Anspruch 1, weiterhin aufweisend eine mit der Erkennungseinheit (24) und der Ausgabeeinheit (32) verbundene Steuereinheit (26), die so ausgebildet ist, dass sie im Betrieb der Vorrichtung (60) von der Erkennungseinheit (24) Signale über fehlerhafte Bereiche des Federdrahts (10) erhält und die Ausgabeeinheit (32) so ansteuert, dass diejenigen Federn, die aus dem fehlerhaften Bereich des Federdrahts (10) hergestellt worden sind, in den zweiten Bereich, insbesondere den Behälter mit fehlerhaften Federn (34) gelangen.

3. Verfahren zum Herstellen von Federn aus einem Federdraht, aufweisend die folgenden Schritte:
Zuführen von Federdraht (10), bei dem fehlerhafte Bereiche, insbesondere Bereiche mit Material- und Oberflächenfehlern, mit einer Laser-Markierung (44), die als Vertiefung in der Oberfläche des Federdrahts (10) im Bereich von 1µm bis 1mm ausgebildet ist, markiert sind, mittels einer Federdraht-Zuführeinheit (28);
Erkennen von Laser-Markierungen (44) auf dem Federdraht (10), mittels einer Erkennungseinheit (24);
kontinuierliches und unterbrechungsfreies Herstellen, insbesondere Winden und Ablängen von Federn aus dem Federdraht (10), mittels einer Federherstellungseinheit (30);
Ausgeben derjenigen Federn, die aus Federdraht (10) ohne Laser-Markierung hergestellt worden sind, in einen ersten Bereich, insbesondere einen Behälter mit fehlerfreien Federn (36), und Ausgeben derjenigen Federn, die aus Federdraht (10) mit Laser-Markierung (44) hergestellt worden sind, in einen zweiten Bereich, insbesondere einen Behälter mit fehlerhaften Federn (34), mittels einer Ausgabeeinheit (32), insbesondere eines Ausgabeschachts mit Weiche.

4. System, aufweisend eine Vorrichtung zum Herstellen eines Federdrahts (2), aufweisend:
eine Drahtherstellungseinrichtung (8), die so ausgebildet ist, dass ein Federdraht (10) aus einem Rohmaterial, insbesondere durch Ziehen herstellbar ist;
eine Prüfeinheit (14), die so ausgebildet ist, dass der Federdraht (10) auf Fehler, insbesondere auf Material- und Oberflächenfehler, überprüfbar ist; und
eine Laser-Markiereinheit (18), die so ausgebildet ist, dass fehlerhafte Bereiche des Federdrahts (10), insbesondere Bereiche des Federdrahts (10) mit Material- und Oberflächenfehlern, derart mit einer Laser-Markierung (44) markierbar sind,
dass ein Teil der Oberfläche des Federdrahts (10) durch Verdampfung des Materials, insbesondere mit einer Verdampfungstemperatur von 2000°C bis 4000°C, so abtragbar ist, dass eine Vertiefung der Laser-Markierung (44) in der Oberfläche des Federdrahts (10) im Bereich von 1µm bis 1mm entsteht;
wobei die Drahtherstellungseinrichtung (8) so ausgebildet ist, dass der Federdraht (10) an der Prüfeinheit (14) und an der Laser-Markiereinheit (18) vorbei führbar ist; und
aufweisend eine Vorrichtung zum Herstellen von Federn aus dem Federdraht.

5. System, aufweisend eine Vorrichtung zum Markieren eines Federdrahts (21), aufweisend:
eine Zuführeinheit. insbesondere eine Zuführrolle (22) zum Zuführen eines Federdrahts (10);
eine Prüfeinheit (14), die so ausgebildet ist, dass der Federdraht (10) auf Fehler, insbesondere auf Material- und Oberflächenfehler, überprüfbar ist; und
eine Laser-Markiereinheit (18), die so ausgebildet ist, dass fehlerhafte Bereiche des Federdrahts (10), insbesondere Bereiche des Federdrahts (10) mit Material- und Oberflächenfehlern, derart mit einer Laser-Markierung (44) markierbar sind,
dass ein Teil der Oberfläche des Federdrahts (10) durch Verdampfung des Materials, insbesondere mit einer Verdampfungstemperatur von 2000°C bis 4000°C, so abtragbar ist, dass eine Vertiefung der Laser-Markierung (44) in der Oberfläche des Federdrahts (10) im Bereich von 1µm bis 1mm entsteht;
wobei die Zuführeinheit (22) so ausgebildet ist, dass der Federdraht (10) an der Prüfeinheit (14) und an der Laser-Markiereinheit (18) vorbei führbar ist; und
aufweisend eine Vorrichtung zum Herstellen von Federn aus dem Federdraht.

6. System nach Anspruch 4 oder 5, wobei die Vorrichtung zum Herstellen bzw. zum Markieren eines Federdrahts weiterhin eine mit der Prüfeinheit (14) und der Laser-Markiereinheit (18) verbundene Steuereinheit (16) aufweist, die so ausgebildet ist, dass sie im Betrieb der Vorrichtung (2) von der Prüfeinheit (14) Signale über fehlerhafte Bereiche des Federdrahts (10) erhält und die Laser-Markiereinheit (18) so ansteuert, dass diese wenigstens eine Laser-Markierung (44) in diese fehlerhaften Bereiche des Federdrahts (10) einbringt.

7. System (2) nach einem der Ansprüche 4 bis 6, wobei die Laser-Markiereinheit (18) eine Strahlquelle (38) und/oder einer Scanneroptik (40) oder eine Projektionsmaske und/oder einer Fokussiereinrichtung (42) aufweist, die so angeordnet ist/sind, dass sie auf den sich bewegenden Federdraht (10) gerichtet sind.

8. System (2) nach einem der Ansprüche 4 bis 7, wobei die Laser-Markiereinheit (18) so ausgebildet ist, dass die fehlerhaften Bereiche des Federdrahts (10) so markiert werden, dass die Laser-Markierung (44) einen maschinenlesbaren Code, insbesondere einen Strichcode (54), einen Barcode (56) oder einen Data-Matrix-Code (58), oder einen maschinenlesbaren Text bildet, und/oder wobei die Laser-Markiereinheit (18) so ausgebildet ist, dass jeder fehlerhafte Bereich jeweils mit der gleichen Laser-Markierung (44) versehen wird, oder dass jeder fehlerhafte Bereich jeweils mit einer eindeutig unterscheidbaren Laser-Markierung (44) versehen wird, und/oder wobei die Laser-Markierung (44) Zusatzinformationen über den jeweils markierten fehlerhaften Bereich enthält.

9. System (2) nach einem der Ansprüche 4 bis 8, wobei die Laser-Markiereinheit (18) so angeordnet oder ausgebildet ist, dass die Laser-Markierung (44) so auf den oder die fehlerhaften Bereiche des Federdrahts (10) aufgebracht wird, dass sie sich wenigstens über einen Großteil des Umfangs des Federdrahts (10), insbesondere über dessen gesamten Umfang erstreckt, oder wobei die Laser-Markierung (44) so auf den oder die fehlerhaften Bereiche des Federdrahts (10) aufgebracht wird, dass sie sich nur über einen Teilbereich des Umfangs des Federdrahts (10) erstreckt.

10. Verfahren zum Herstellen von Federn aus einem Federdraht, wobei zunächst ein Verfahren zum Herstellen eines Federdrahts (10) ausgeführt wird, das die folgenden Schritte aufweist:
Herstellen, insbesondere Ziehen, eines Federdrahts (10), aus einem Rohmaterial;
Überprüfen des Federdrahts (10) auf Fehler, insbesondere auf Material- und Oberflächenfehler; und
Markieren der fehlerhaften Bereiche des Federdrahts, insbesondere Bereiche des Federdrahts (10) mit Material- und Oberflächenfehlern, mit einer Laser-Markierung (44), mittels einer Laser-Markiereinheit (18) derart,
dass die Laser-Markiereinheit (18) einen Teil der Oberfläche des Federdrahts (10) durch Verdampfung des Materials, insbesondere mit einer Verdampfungstemperatur von 2000°C bis 4000°C, so abträgt, dass eine Vertiefung der Laser-Markierung (44) in der Oberfläche des Federdrahts (10) im Bereich von 1µm bis 1mm entsteht; und
wobei anschließend Federn aus dem Federdraht hergestellt werden.

11. Verfahren zum Herstellen von Federn aus einem Federdraht, wobei zunächst ein Verfahren zum Markieren eines Federdrahts (10) ausgeführt wird, das die folgenden Schritte aufweist:
Zuführen eines Federdrahts (10) mittels einer Zuführeinheit. insbesondere einer Zuführrolle (22);
Überprüfen des Federdrahts (10) auf Fehler, insbesondere auf Material- und Oberflächenfehler; und
Markieren der fehlerhaften Bereiche des Federdrahts, insbesondere Bereiche des Federdrahts (10) mit Material- und Oberflächenfehlern, mit einer Laser-Markierung (44), mittels einer Laser-Markiereinheit (18) derart,
dass die Laser-Markiereinheit (18) einen Teil der Oberfläche des Federdrahts (10) durch Verdampfung des Materials, insbesondere mit einer Verdampfungstemperatur von 2000°C bis 4000°C, so abträgt, dass eine Vertiefung der Laser-Markierung (44) in der Oberfläche des Federdrahts (10) im Bereich von 1µm bis 1mm entsteht; und
wobei anschließend Federn aus dem Federdraht hergestellt werden.

12. Federdraht (10), aufweisend:
ein Rohmaterial, insbesondere aus Federstahl, mit einem im Wesentlichen konstanten länglichen Profil;
wobei fehlerhafte Bereiche des Federdrahts (10), insbesondere Bereiche des Federdrahts (10) mit Material- und Oberflächenfehlern, mit einer Laser-Markierung (44) markiert sind, bei der die Oberfläche des Federdrahts (10) gegenüber der Oberfläche benachbarter Bereiche und bezogen auf die Längsmittelachse im Bereich von 1µm bis 1mm vertieft ist; und
wobei der Federdraht in Federn umgeformt ist.

13. Federdraht (10) nach Anspruch 12, wobei in dem Fall, dass die Laser-Markierung (44) als vertiefter Oberflächenbereich des Federdrahts (10) ausgebildet ist, die Vertiefung 10µm bis 1mm beträgt, gemessen von der nicht-vertieften Oberfläche zur Längsmittelachse.

14. Federdraht (10) nach einem der Ansprüche 12 bis 13, wobei die Laser-Markierung (44) einen maschinenlesbaren Code, insbesondere einen Strichcode, einen Barcode (56) oder einen Data-Matrix-Code (58), oder einen maschinenlesbaren Text bildet, und/oder wobei jeder fehlerhafte Bereich jeweils mit der gleichen Laser-Markierung (44) versehen ist, oder wobei jeder fehlerhafte Bereich jeweils mit einer eindeutig unterscheidbaren Laser-Markierung (44) versehen ist, und/oder wobei die Laser-Markierung (44) Zusatzinformationen über den jeweils markierten fehlerhaften Bereich enthält.

15. Federdraht (10) nach einem der Ansprüche 12 bis 14, wobei sich die Laser-Markierung (44) wenigstens über einen Großteil des Umfangs des Federdrahts (44), insbesondere über dessen gesamten Umfang erstreckt, oder wobei sich die Laser-Markierung (44) nur über einen Teilbereich des Umfangs des Federdrahts (10) erstreckt.

## Claims

1. A device for producing springs from a spring wire (60), comprising:
a spring wire supply unit (28), in particular a supply roller (22), for supplying spring wire (10) in which defective regions, in particular regions having material and surface flaws, are marked with a laser marking (44) formed as a recess in the surface of the spring wire (10) with a depth from 1 µm to 1 mm;
a recognition unit (24) which is designed such that it recognizes laser markings (44) on the spring wire (10);
a spring production unit (30), in particular a coiling machine, which is designed such that springs can be produced from the spring wire (10) continuously and without interruption, and in particular can be coiled and cut to length;
a discharge unit (32), in particular a discharge duct having a switch, which is designed such that springs produced from spring wire (10) without laser marking are discharged into a first area, in particular a container with nondefective springs (36), and springs produced from spring wire (10) with laser marking (44) are discharged into a second area, in particular a container with defective springs (34).

2. The device (60) according to claim 1,
further comprising a control unit (26) connected to the recognition unit (24) and the discharge unit (32) and designed such that, during operation of the device (60), it receives signals on defective regions of the spring wire (10) from the recognition unit (24) and controls the discharge unit (32) such that springs produced from the defective region of the spring wire (10) are passed to the second area, in particular the container with defective springs (34).

3. A method for producing springs from a spring wire, comprising the following steps:
supplying spring wire (10), in which defective regions, in particular regions having material and surface flaws, are marked with a laser marking (44) formed as a recess in the surface of the spring wire (10) with a depth from 1 µm to 1 mm, by means of a spring wire supply unit (28);
recognizing laser markings (44) on the spring wire (10) by means of a recognition unit (24);
continuous and uninterrupted production, in particular coiling and cutting to length, of springs from the spring wire (10) by means of a spring production unit (30);
discharging those springs that have been produced from spring wire (10) without laser marking into a first area, in particular a container with non-defective springs (36), and discharging those springs that have been produced from spring wire (10) with laser marking (44) into a second area, in particular a container with defective springs (34), by means of a discharge unit (32), in particular a discharge duct having a switch.

4. A system comprising a device for producing a spring wire (2), comprising:
a wire production apparatus (8) which is designed such that a spring wire (10) can be produced from a raw material, in particular by drawing;
a checking unit (14) which is designed such that the spring wire (10) can be checked for flaws, in particular material flaws and surface flaws; and
a laser marking unit (18) which is designed such that defective regions of the spring wire (10), in particular regions of the spring wire (10) having material and surface flaws, can be marked with a laser marking (44) such that part of the surface of the spring wire (10) can be removed by evaporation of the material, in particular with an evaporation temperature of 2000 °C to 4000 °C, such that a recess of the laser marking (44) is created in the surface of the spring wire (10) having a depth from 1 µm to 1 mm;
with the wire production apparatus (8) being designed such that the spring wire (10) can be guided past the checking unit (14) and past the laser marking unit (18); and
comprising a device for producing springs from the spring wire.

5. A system comprising a device for marking a spring wire (21), comprising:
a supply unit, in particular a supply roller (22) for supplying a spring wire (10);
a checking unit (14) which is designed such that the spring wire (10) can be checked for flaws, in particular for material and surface flaws; and
a laser marking unit (18) which is designed such that defective regions of the spring wire (10), in particular regions of the spring wire (10) having material and surface flaws, can be marked with a laser marking (44) such that a part of the surface of the spring wire (10) can be removed by evaporation of the material, in particular with an evaporation temperature of 2000 °C to 4000 °C, such that a recess of the laser marking (44) is created in the surface of the spring wire (10) having a depth from 1 µm to 1 mm;
with the supply unit (22) being designed such that the spring wire (10) can be guided past the checking unit (14) and past the laser marking unit (18); and
comprising a device for producing springs from the spring wire.

6. The system according to claim 4 or 5,
wherein the device for producing a spring wire and, respectively, marking a spring wire further comprises a control unit (16) connected to the checking unit (14) and the laser marking unit (18) and designed such that, during operation of the device (2) it receives signals on defective regions of the spring wire (10) from the checking unit (14) and controls the laser marking unit (18) such that the latter introduces at least one laser marking (44) into these defective regions of the spring wire (10).

7. The system (2) according to any of claims 4 to 6,
wherein the laser marking unit (18) comprises a radiation source (38) and/or a scanner optical system (40) or a projection mask and/or a focusing means (42) which is/are arranged such that they are directed towards the moving spring wire (10).

8. The system (2) according to any of claims 4 to 7,
wherein the laser marking unit (18) is designed such that the defective regions of the spring wire (10) are marked such that the laser marking (44) forms a machine-readable code, in particular a line code (54), a barcode (56) or a data matrix code (58), or a machine-readable text, and/or wherein the laser marking unit (18) is designed such that each defective region is respectively provided with the same laser marking (44), or that each defective region is respectively provided with an unambiguously distinguishable laser marking (44), and/or wherein the laser marking (44) contains additional information on the respectively marked defective region.

9. The system (2) according to any of claims 4 to 8,
wherein the laser marking unit (18) is arranged or designed such that the laser marking (44) is applied to the defective region or regions of the spring wire (10) such that it extends at least across large part of the circumference of the spring wire (10), in particular across the entire circumference of the same, or wherein the laser marking (44) is applied to the defective region or regions of the spring wire (10) such that it extends only across a partial region of the circumference of the spring wire (10).

10. A method for producing springs from a spring wire, wherein a method for producing a spring wire (10) is carried out first, comprising the following steps:
producing, in particular drawing, a spring wire (10) from a raw material;
checking the spring wire (10) for flaws, in particular for material and surface flaws; and
marking the defective regions of the spring wire, in particular regions of the spring wire (10) having material and surface flaws, with a laser marking (44) by means of a laser marking unit (18) such that the laser marking unit (18) removes part of the surface of the spring wire (10) by evaporation of the material, in particular with an evaporation temperature of 2000 °C to 4000 °C, such that a recess of the laser marking (44) is created in the surface of the spring wire (10) having a depth from 1 µm to 1 mm; and
wherein springs are produced from the spring wire thereafter.

11. A method for producing springs from a spring wire, wherein a method for marking a spring wire (10) is carried out first, comprising the following steps:
supplying a spring wire (10) by means of a supply unit, in particular a supply roller (22);
checking the spring wire (10) for flaws, in particular for material and surface flaws; and
marking the defective regions of the spring wire, in particular regions of the spring wire (10) having material and surface flaws, with a laser marking (44) by means of a laser marking unit (18) such that the laser marking unit (18) removes part of the surface of the spring wire (10) by evaporation of the material, in particular with an evaporation temperature of 2000 °C to 4000 °C, such that a recess of the laser marking (44) is created in the surface of the spring wire (10) having a depth from 1 µm to 1 mm; and
wherein springs are produced from the spring wire thereafter.

12. A spring wire (10), comprising:
a raw material, in particular of spring steel, having a substantially constant elongated outline;
wherein defective regions of the spring wire (10), in particular regions of the spring wire (10) having material and surface flaws, are marked with a laser marking (44) in which the surface of the spring wire (10) is recessed in relation to the surface of adjacent regions and with respect to the longitudinal central axis to a depth from 1 µm to 1 mm;
and wherein the spring wire is reshaped into springs.

13. The spring wire (10) according to claim 12,
wherein in case the laser marking (44) is provided in the form of a recessed surface region of the spring wire (10), the recess has a depth from 10 µm to 1 mm as measured from the non-recessed surface to the longitudinal central axis.

14. The spring wire (10) according to any of claims 12 to 13,
wherein the laser marking (44) forms a machine-readable code, in particular a line code, a barcode (56) or a data matrix code (58), or a machine-readable text, and/or wherein each defective region is respectively provided with the same laser marking (44), or wherein each defective region is respectively provided with an unambiguously distinguishable laser marking (44) and/or wherein the laser marking (44) contains additional information on the respectively marked defective region.

15. The spring wire (10) according to any of claims 12 to 14,
wherein the laser marking (44) extends at least across large part of the circumference of the spring wire (44), in particular across the entire circumference of the same, or wherein the laser marking (44) extends only across a partial region of the circumference of the spring wire (10).

## Revendications

1. Dispositif de fabrication de ressorts à partir d'un fil pour ressorts (60), comportant :
une unité d'amenée de fil pour ressorts (28), en particulier une bobine d'amenée (22), pour l'amenée defil pour ressorts (10), dans lequel des zones défectueuses, en particulierdes zones comportant des défauts de matériau et de surface, sont marquées avec un marquage laser (44) réalisé sous forme d'enfonçure de l'ordre de 1µm à 1 mm dans la surface du fil pour ressorts (10) ;
une unité de détection (24) qui est conçue de telle façon qu'elle détecte desmarquages laser (44) sur lefil pour ressorts (10) ;
une unité de fabrication de ressorts (30), en particulier un automate enrouleur conçu de telle façon que desressorts à partir du fil pour ressorts (10) peuvent être fabriqués en continu et sans interruption, étant en particulier enroulables et tronçonnables ;
une unité de délivrance (32), en particulier un bac délivrance ayant un séparateur conçu pour délivrer dans une première zone, en particulier dans un conteneur à ressorts sans défauts (36), desressorts qui ont été fabriqués à partir de fil pour ressorts (10) sans marquage laser, et pour délivrer dans une deuxième zone, en particulier dans un conteneur à ressorts défectueux (34), desressorts qui ont été fabriqués à partir de fil pour ressorts (10) ayant un marquage laser(44).

2. Dispositif (60) selon la revendication 1, comportant en outre une unité de commande (26) qui est reliée avec l'unité de détection (24) et avec l'unité de délivrance (32) et qui est conçue de telle manière que, lors du fonctionnement du dispositif (60), elle reçoit de la part del'unité de détection (24) des signaux concernant des zones défectueuses du fil pour ressorts (10) et commande l'unité de délivrance (32) de telle façon que les ressorts qui ont étéfabriqués à partir de la zone défectueuse du fil pour ressorts (10) arrivent dans la deuxième zone, en particulier dans le conteneur à ressorts défectueux (34).

3. Procédé de fabrication de ressorts à partir d'un fil pour ressorts, comportant les étapes suivantes :
amenée de fil pour ressorts (10) dont des zones défectueuses, en particulierdes zones comportant des défauts de matériau et de surface, sont marquées avec un marquage laser (44) réalisé sous forme d'enfonçure de l'ordre de 1µm à 1 mm dans la surface du fil pour ressorts (10), au moyen d'une unité d'amenée de fil pour ressorts (28) ;
détection démarquages laser (44) sur lefil pour ressorts (10) au moyen d'une unité de détection (24) ;
fabrication, en continu et sans interruption, en particulier enroulement ettronçonnement, de ressortsà partir du fil pour ressorts (10),au moyen d'une unité de fabrication de ressorts (30);
délivrance, dans une première zone, en particulier dans un conteneur à ressorts sans défauts (36), desressorts qui ont été fabriqués à partir de fil pour ressorts (10) sans marquage laser, et délivrance dans une deuxième zone, en particulier dans un conteneur à ressorts défectueux (34), desressorts qui ont été fabriqués à partir de fil pour ressorts (10) ayant un marquage laser(44), au moyen d'une unité de délivrance (32), en particulier d'un bac délivrance ayant un séparateur.

4. Système comportant un dispositif de fabrication d'un fil pour ressorts (2), comportant :
un équipement de fabricationde fil (8) conçu de telle manière qu'un fil pour ressorts (10) peut être fabriqué à partir d'un matériau brut, en particulier par étirement ;
une unité de vérification (14) conçue de telle manière que le fil pour ressorts (10) peut être vérifié quant à des défauts,en particulier quant à des défauts de matériau et de surface ; et
une unité de marquage laser (18) conçuede telle manière que des zones défectueuses du fil pour ressorts (10),en particulier des zones du fil pour ressorts (10) présentant desdéfauts de matériau et de surface peuvent être marquées de telle façon avec un marquage laser (44)
qu'une partie de la surface du fil pour ressorts (10) peut être enlevée de telle façon par vaporisation du matériau, en particulier à une température devaporisation comprise entre 2000° et 4000°, qu'une enfonçure dumarquage laser (44) de l'ordre de 1µm à 1 mmdans la surfacedu fil pour ressorts (10) est engendrée ;
cependant quel'équipement de fabricationde fil (8)est conçude telle façon que le fil pour ressorts (10) peut être guidé en passant par l'unité de vérification (14) et par l'unité démarquage laser (18) ; et
comportant un dispositif de fabrication de ressorts à partir du fil pour ressorts.

5. Système comportant un dispositif de marquage d'un fil pour ressorts (21), comportant :
une unité d'amenée, en particulier une bobine d'amenée (22), pour l'amenée d'un fil pour ressorts (10) ;
une unité de vérification (14) conçue de telle manière que le fil pour ressorts (10) peut être vérifié quant à des défauts,en particulier quant à des défauts de matériau et de surface ; et
une unité de marquage laser (18) conçuede telle manière que des zones défectueuses du fil pour ressorts (10),en particulier des zones du fil pour ressorts (10) présentant desdéfauts de matériau et de surface, peuvent être marquées de telle façon avec un marquage laser (44)
qu'une partie de la surface du fil pour ressorts (10) peut être enlevée de telle façon par vaporisation du matériau, en particulier à une température devaporisation comprise entre 2000° et 4000°, qu'une enfonçure dumarquage laser (44) de l'ordre de 1µm à 1 mmdans la surfacedu fil pour ressorts (10) est engendrée ;
cependant quel'unité d'amenée est conçuede telle manière que le fil pour ressorts (10) peut être guidé en passant par l'unité de vérification (14) et par l'unité démarquage laser (18) ; et
comportant un dispositif de fabrication de ressorts à partir du fil pour ressorts.

6. Système selon la revendication 4 ou 5, cependant que le dispositif de fabrication ou de marquage d'un fil pour ressorts comporte en outre une unité de commande (16) qui est reliée avec l'unité de détection (14) et avec l'unité de marquage laser (18) et qui est conçue de telle manière que, lors du fonctionnement du dispositif (2), elle reçoit de la part del'unité de vérification (14) des signaux concernant des zones défectueuses du fil pour ressorts (10) et commande l'unité de marquage laser (18) de telle façon que cette dernière pratique au moins un marquage laser (44) dansces zones défectueuses du fil pour ressorts (10).

7. Système (2) selon une des revendications de 4 à 6, cependant que l'unité de marquage laser (18) comporte une source de rayonnement (38) et/ou une optique scanner (40) ou un masque de projection et/ou un équipement de focalisation (42) agencé(es) de telle façon qu'ils sont dirigés vers le fil pour ressorts (10) en train de se mouvoir.

8. Système (2) selon une des revendications de 4 à 7, cependant que l'unité de marquage laser (18) est conçue de telle façon que leszones défectueuses du fil pour ressorts (10) sont marquées detelle façon que lemarquage laser (44) constitue un codelisible par machine, en particulier un code à bâtonnets (54), uncode barres (56) ou un code Data Matrix (58), ou bien un texte lisible par machine, et/ou cependant que l'unité de marquage laser (18) est conçue de telle façon que chaque zone défectueuse est respectivement pourvue du même marquagelaser (44), ou que chaque zone défectueuseest respectivement pourvue d'un marquagelaser (44) univoquement différenciable, et/ou cependant que le marquagelaser (44) contient des informations supplémentaires sur la zone défectueuse respectivement marquée.

9. Système (2) selon une des revendications de 4 à 8, l'unité de marquage laser (18) étant agencée et conçue de telle façon que le marquage laser (44) est appliqué de telle manière sur la ou les zone défectueuses du fil pour ressorts (10) qu'il s'étend au moins sur une grande partie de la circonférence du fil pour ressorts (10), en particulier sur la totalité de sa circonférence, ou cependant que le marquage laser (44) est appliqué de telle manière sur la ou les zone défectueuses du fil pour ressorts (10) qu'il ne s'étend que sur une zone partielle de la circonférence du fil pour ressorts (10).

10. Procédé de fabrication de ressorts à partir d'un fil pour ressorts, cependant que, tout d'abord, un procédé de fabrication d'un fil pour ressorts (10) est exécuté, lequel comporte les étapes suivantes :
fabrication, en particulier étirement, d'un fil pour ressorts (10),à partir d'un matériau brut (10) ;
contrôle du fil pour ressorts (10)quant à des défauts,en particulier quant à des défauts de matériau et de surface ; et
marquage des zones défectueuses du fil pour ressorts, en particulier des zones du fil pour ressorts (10) présentant desdéfauts de matériau et de surface, avec un marquage laser (44), au moyen d'une unité de marquage laser (18), de telle façon
que l'unité de marquage laser (18) enlève de telle façon une partie de la surfacedu fil pour ressorts (10) par vaporisation du matériau, en particulier à une température de vaporisation comprise entre 2000° et 4000°, qu'une enfonçure dumarquage laser (44) de l'ordre de 1µm à 1 mmdans la surfacedu fil pour ressorts (10) est engendrée ; et
cependant que, ensuite, desressorts sont fabriqués à partir du fil pour ressorts.

11. Procédé de fabrication de ressorts à partir d'unfil pour ressorts,cependant que, tout d'abord, un procédé de marquage d'unfil pour ressorts (10) est exécuté, lequel comporte les étapes suivantes :
amenée de fil pour ressorts (10) au moyen d'une unité d'amenée, en particulier d'une bobine d'amenée (22),
contrôle du fil pour ressorts (10)quant à des défauts,en particulier quant à des défauts de matériau et de surface ; et
marquagedes zones défectueuses du fil pour ressorts, en particulier des zones du fil pour ressorts (10) présentant desdéfauts de matériau et de surface, avec un marquage laser (44), au moyen d'une unité de marquage laser (18), de telle façon
que l'unité de marquage laser (18) enlève de telle façon une partie de la surfacedu fil pour ressorts (10) par vaporisation du matériau, en particulier à une température de vaporisation comprise entre 2000° et 4000°, qu'une enfonçure dumarquage laser (44) de l'ordre de 1µm à 1 mmdans la surfacedu fil pour ressorts (10) est engendrée ; et
cependant que, ensuite, desressorts sont fabriqués à partir du fil pour ressorts.

12. Fil pour ressorts (10), comportant :
un matériau brut, en particulier en acier à ressorts ayant un profil allongé essentiellement constant ;
cependant que deszones défectueuses du fil pour ressorts (10), en particulierdes zones du fil pour ressorts (10) comportant des défauts de matériau et de surface, sont marquées avec marquage laser (44) auquel la surface du fil pour ressorts (10) est, par rapport à la surface de zones avoisinantes et relativement à l'axe médian longitudinal, enfoncé d'environ1µm à 1 mm ; et
cependant que le fil pour ressorts est transformé en ressorts.

13. Fil pour ressorts (10) selon la revendication12, cependant que, dans le cas où le marquage laser (44)est réalisé sous forme de zone de surfaceenfoncée du fil pour ressorts (10), l'enfonçure, mesurée de la surface non enfoncée à l'axe médian longitudinal, est de10µm à 1 mm.

14. Fil pour ressorts (10) selon une des revendication de 12 à 13, cependant que le marquage laser (44)constitue un codelisible par machine, en particulier un code à bâtonnets, uncode barres (56) ou un code Data Matrix (58), ou bien un texte lisible par machine, et/ou cependant que chaque zone défectueuse est respectivement pourvue du même marquagelaser (44), ou cependant que chaque zone défectueuseest respectivement pourvue d'unmarquagelaser (44) univoquement différenciable, et/ou cependant que le marquagelaser (44) contient des informations supplémentaires sur la zone défectueuse respectivement marquée.

15. Fil pour ressorts (10) selon une des revendication de 12 à 14, cependant que le marquage laser (44)s'étend au moins sur une grande partie de la circonférence du fil pour ressorts (44), en particulier sur la totalité de sa circonférence, ou cependant que le marquage laser (44) ne s'étend que sur une zone partielle de la circonférence du fil pour ressorts (10).
